(19) Europäisches Patentamt
European Patent Office
Office européen des brevets

(11) Veröffentlichungsnummer: **0 349 773**
**A2**

(12) **EUROPÄISCHE PATENTANMELDUNG**

(21) Anmeldenummer: **89110209.7**

(51) Int. Cl.4: **C08G 63/60 , C08G 75/26 , C08G 69/44 , C08G 69/32**

(22) Anmeldetag: **06.06.89**

(30) Priorität: **15.06.88 DE 3820361**

(43) Veröffentlichungstag der Anmeldung:
**10.01.90 Patentblatt 90/02**

(84) Benannte Vertragsstaaten:
**BE CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Pipper, Gunter**
**Schlangenthaler Weg 10**
**D-6702 Bad Duerkheim(DE)**
Erfinder: **Heinz, Gerhard, Dr.**
**Im Vogelsang 2**
**D-6719 Weisenheim(DE)**
Erfinder: **Hisgen, Bernd, Dr.**
**Goethestrasse 6**
**D-6703 Limburgerhof(DE)**

(54) **Verfahren zur kontinuierlichen Herstellung von aromatischen Polykondensaten.**

(57) Verfahren zur kontinuierlichen Herstellung von aromatischen Polykondensaten, aus

a) aromatischen Hydroxy-, Thio- und/oder Aminocarbonsäuren,

b) aromatischen Dihydroxy-, Dithio-, Diamino- und/oder Hydroxy-Aminoverbindungen,

c) gegebenenfalls Harnstoff und

d) einer Summe der Komponenten b) und c) äquivalenten molaren Menge an aromatischen Dicarbonsäuren, durch

1. Umsetzen der Komponenten a), b) und d) und gegebenenfalls c) mit niederen Fettsäureanhydriden im Überschuß, bei einer Temperatur von 140 bis 280 °C unter Abdestillieren von Fettsäuren und Fettsäureanhydriden,

2. Leiten des Oligomerengemisches von oben nach unten durch eine senkrechte Präkondensationszone unter Bildung eines zweiphasigen Gemisches aus Präpolymeren und dampfförmigen Fettsäuren,

3. Trennen der Präpolymeren von den dampfförmigen Fettsäuren und

4. Kondensieren des Präpolymeren in einer Kondensationszone zu granulierfähigen Polykondensat.

EP 0 349 773 A2

## Verfahren zur kontinuierlichen Herstellung von aromatischen Polykondensaten

Aromatische Polykondensate wie Polyester oder Polyesteramide werden z.B. aus Terephthalsäure, Hydrochinon, Aminophenol, Hydroxybenzoesäure und Aminobenzoesäure hergestellt, indem man die in den Ausgangsstoffen enthaltenen Amino- und Hydroxygruppen mit Säureanhydriden umsetzt und dann unter Abspaltung und Abdestillieren von Carbonsäuren bei Temperaturen bis 350 °C unter vermindertem Druck erhitzt. Ein solches Verfahren wird beispielsweise beschrieben in der EP-A-230 545. Bei der bisher angewandten absatzweisen Herstellung hat sich als sehr nachteilig erwiesen, daß die Durchmischung aufgrund der hohen Viskosität schwierig ist, die Kondensation mehrere Stunden in Anspruch nimmt und zudem Polykondensate erhalten werden, deren Farbqualität den Ansprüchen nicht mehr genügt.

Es war deshalb die technische Aufgabe gestellt, ein Verfahren zur Herstellung von aromatischen Polykondensaten zur Verfügung zu stellen, das auf einfache Weise kontinuierlich durchführbar ist, in kurzer Zeit verläuft und Polykondensate mit verbesserter Farbqualität liefert.

Diese Aufgabe wird gelöst in einem Verfahren zur Herstellung von aromatischen Polykondensaten, aufgebaut aus

a) aromatischen Hydroxy-, Thio- und/oder Aminocarbonsäuren, in denen die Hydroxy-, Thio- oder Aminogruppe jeweils nicht vicinal zur Carboxylgruppe steht,

b) aromatischen Dihydroxy-, Dithio-, Diamino- und/oder Hydroxy-Aminoverbindungen, in denen die Hydroxy-, Thio- und Aminogruppen nicht vicinal zueinander angeordnet sind und die bis zu 30 mol.% durch Alkandiamine mit 4 bis 10 Kohlenstoffatome und/oder Cycloalkandiaminen mit 5 bis 8 Kohlenstoffatomen ersetzt sein können,

c) gegebenenfalls Harnstoff und

d) einer Summe der Komponenten b) und c) äuqivalenten molaren Menge an aromatischen Dicarbonsäuren, in denen die Carboxylgruppen nicht vicinal angeordnet sind, und die bis zu 30 mol.% durch Alkandicarbonsäure mit 6 bis 12 Kohlenstoffatomen und/oder Cycloalkandicarbonsäuren mit 7 bis 10 Kohlenstoffatomen ersetzt sein können, welches folgende Schritte umfaßt:

1) Umsetzung der Komponenten a), b) und d) und gegebenenfalls c) mit niederen Fettsäureanhydriden im molaren Überschuß, bezogen auf die Hydroxy-, Thio- und Aminogruppen, bei einer Temperatur von 150 bis 280 °C unter Abdestillieren von gebildeten Fettsäuren und überschüssigen Fettsäureanhydriden unter Bildung eines Oligomerengemisches,

2) Leiten des Oligomerengemisches aus der Stufe 1 von oben nach unten durch eine im wesentlichen senkrechte rohrförmige Präkondensationszone mit einer freien Oberfläche von 0,3 bis 1,5 $m^2/l$ mit einer Verweilzeit von 3 bis 30 Minuten unter einem Druck von 0,5 bis 100 mbar bei einer Temperatur von 250 bis 370 °C unter Bildung eines zweiphasigen Gemisches aus Präpolymeren und dampfförmigen Fettsäuren,

3) Trennen des Präpolymeren von den dampfförmigen Fettsäuren und

4) Kondensieren des Präpolymeren in einer Kondensationszone bei einer Temperatur von 250 bis 360 °C unter einem Druck von 0,5 bis 100 mbar mit einer Verweilzeit von 10 bis 60 Minuten zu einem granulierfähigen Polykondensat.

Das neue Verfahren hat den Vorteil, daß es auf einfache Weise gestattet, aromatische Polykondensate kontinuierlich mit kurzer Verweilzeit herzustellen. Ferner hat das neue Verfahren den Vorteil, daß Polykondensate mit verbesserter Farbqualität erhalten werden.

Als Ausgangsstoffe a) verwendet man aromatische Hydroxy-, Thio- und/oder Aminocarbonsäuren, in denen die Hydroxy-, Thio- oder Aminogruppe nicht vicinal zur Carbonylgruppe stehen. Geeignete Verbindungen sind beispielsweise 4-Hydroxybenzoesäure, 3-Hydroxybenzoesäure, 6-Hydroxynaphthalin-2-carbonsäure, 6-Hydroxynaphthalin-1-carbonsäure, 3-Aminobenzoesäure, 4-Aminobenzoesäure und deren $C_1$-$C_4$-Alkyl-, $C_1$-$C_4$-Alkoxy- oder Halogen-derivate wie 3-Methyl-4-hydroxybenzoesäure, 3,5-Dimethyl-4-hydroxybenzoesäure, 2,5-Dichlor-4-hydroxybenzoesäure, 4-Mercaptobenzoesäure, 3-Mercaptobenzoesäure, 6-Mercaptonaphthalin-2-carbonsäure, 4-Aminobenzoesäure oder 3-Aminobenzoesäure.

Besonders bevorzugt sind 4-Hydroxybenzoesäure, 3-Hydroxybenzoesäure, 4-Aminobenzoesäure und 3-Aminobenzoesäure.

Als Ausgangsstoffe b) verwendet man aromatische Dihydroxy-, Dithio-, Diamino- oder Hydroxy- bzw. Thio-Aminoverbindungen, in denen die Hydroxy-, Thio- und Aminogruppen nicht vicinal zueinander angeordnet sind und die bis zu 30 mol.% durch Alkanoldiamine mit 4 bis 10 Kohlenstoffatome und/oder Cycloalkandiamine mit 5 bis 8 Kohlenstoffatomen ersetzt sein können. Geeignete Verbindungen sind beispielsweise Hydrochinon, Methylhydrochinon, Phenylhydrochinon, tert-Butylhydrochinon, Chlorhydrochinon, 4,4′-Dihydroxidiphenyl, 1,4-Di(4-hydroxyphenyl)benzol, 1,2-Di(4-hydroxyphenoxy)ethan, 4,4′-Dihydroxydiphenylether, 4,4′-Dihydroxydiphenylsulfon, 3,3′-Dihydroxydiphenyl, 3,3′-Dihydroxydiphenylether, 3,4′-Dihydroxydiphenyl, 3,4′-Dihydroxydiphenylether, 2,2-Di(4-hydroxyphenyl)propan, 1,6-, 2,6- und 2,7-Dihydroxynaphthalin, 3,3′, 5,5′-Tetramethyl-, 4,4′-Dihydroxydiphenyl, 4,4′-Di(p-hydroxyphenoxy)diphenylsulfon, 1,4-Diaminobenzol, 1,3-Diaminobenzol, 3-Aminophenol, 4-Aminophenol, trans- und cis-1,4-Cyclohexandiamin.

Als Ausgangsstoffe b) können weiterhin hydroxy- und/oder aminofunktionelle Oligomere beispielsweise von Polysulfonen, Polyethersulfonen, Polyetherimiden und Polyaryletherketonen verwendet werden.

Bevorzugt werden aromatische Dihydroxy-, Diamino- und/oder Hydroxy-Aminoverbindungen verwendet.

Als Ausgangsverbindung c) verwendet man Harnstoff, sofern Carbamidgruppen im Polykondensat enthalten sein sollen in einer Menge z.B. von 0,1 bis 10 Mol.%.

Als Ausgangsstoffe d) verwendet man aromatische Dicarbonsäuren, in denen die Carboxylgruppen nicht vicinal angeordnet sind und die bis zu 30 mol.% Alkandicarbonsäure mit 6 bis 12 Kohlenstoffatomen und/oder Cycloalkandicarbonsäure mit 7 bis 10 Kohlenstoffatomen ersetzt sein können, in äquivalenten molaren Mengen, bezogen auf die Summe der Komponenten b) und c). Bevorzugt verwendet man aromatische Dicarbonsäuren. Geeignete Verbindungen sind beispielsweise Terepthalsäure, Isophthalsäure, 2,6-Naphthalindicarbonsäure, 2,7-Naphthalindicarbonsäure, 4,4′-Dicarboxydiphenyl, 4,4″-Dicarboxyterphenyl und Dicarboxydiphenylderivate der allgemeinen Formeln I, II und III

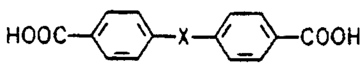

(I)

| | |
|---|---|
| X = O | 4,4′-Dicarboxydiphenylether |
| X = $CH_2CH_2$ | 1,2-Di-(4-carboxyphenyl)ethan |
| X = $OCH_2CH_2O$ | 1,2-Di-(4-carboxyphenoxy)-ethan |
| X = $O(CH_2)_4O$ | 1,4-Di-(4-carboxyphenoxy)-butan |

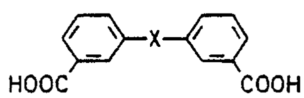

(II)

| | |
|---|---|
| X = O | 3,3′-Dicarboxydiphenylether |
| X = $CH_2CH_2$ | 1,2-Di-(3-carboxyphenyl)ethan |
| X = $OCH_2CH_2O$ | 1,2-Di-(3-carboxyphenoxy)-ethan |
| X = $O(CH_2)_4O$ | 1,4-Di-(3-carboxyphenoxy)-butan. |

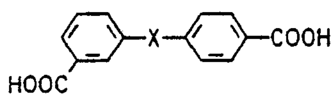

(III)

| | |
|---|---|
| X = O | 3,4′-Dicarboxydiphenylether |
| X = $CH_2CH_2$ | 1,2-Di-(3,4′-carboxy)-diphenyl)ethan |
| X = $OCH_2CH_2O$ | 1,2-Di-(3,4′-Dicarboxy)-diphenoxyethan |
| X = $O(CH_2)_4O$ | 1,4-Di-(3,4′-Dicarboxy)-diphenoxybutan |

Weiter sind zu nennen Dicarbonsäuren der allgemeinen Formel IV bis VI

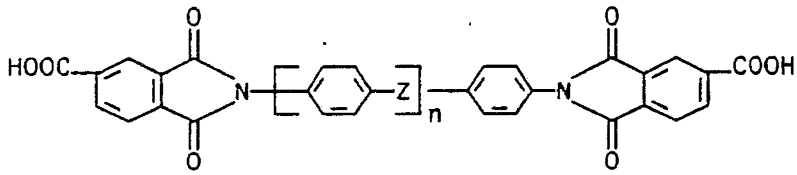

(IV)

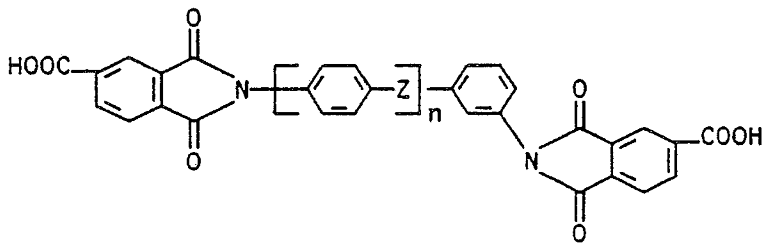

(V)

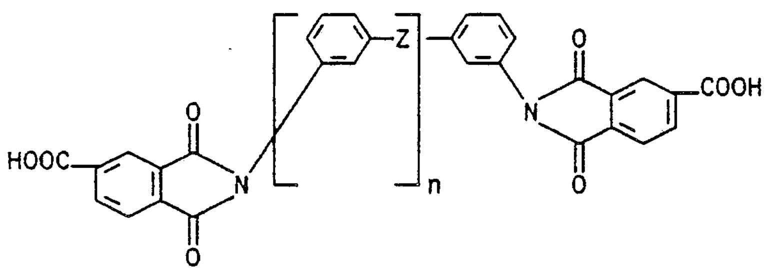

(VI)

wobei Z jeweils -O-, -S-, $-SO_2-$, $-CH_2-$, $-C(CH_3)_2$ oder eine chemische Bindung und n 0 oder 1 ist.

Beispiele hierfür sind

Z = O 4,4'- bzw. 3,4'- bzw. 3,3'-Di-(4-carboxy-N-phthalimido)diphenylether

Z = $CH_2$ 4,4'- bzw. 3,4'- bzw. 3,3'-Di-(4-carboxy-N-phthalimido)-diphenylmethan

Z = $SO_2$ 4,4'- bzw. 3,4'- bzw. 3,3'-Di-(4-carboxy-N-phthalimido)-diphenylsulfon

Z = CO 4,4'- bzw. 3,4'- bzw. 3,3'-Di-(4-carboxy-N-phthalimido)-diphenylketon

Z = S 4,4'- bzw. 3,4'- bzw. 3,3'-Di-(4-carboxy-N-phthalimido)-diphenylsulfid

und z.B.

Z = $C(CH_3)_2$ 2,2-Di-[4,4'-di(4-carboxy-N-phthalimido)phenyl]propan.

Ebenfalls geeignet sind p,p'-, m,m'- und p,m'-Dicarboxyphenylketone der allgemeinen Formeln VII bis IX

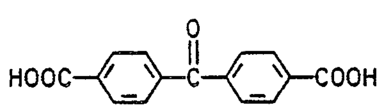

(VII)

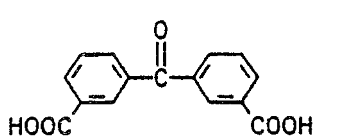

(VIII)

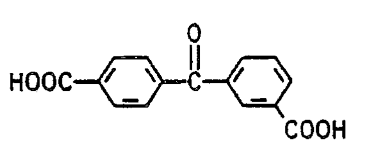

(IX).

Die vorstehend genannten Carbonsäuren können auch Substituenten wie $C_1$-$C_4$-Alkyl-, $C_1$-$C_4$-Alkoxygruppen oder Halogenatomen aufweisen. Schließlich seien auch noch einige aliphatische Dicarbonsäuren wie cis- und trans-1,4-Cyclohexandicarbonsäure und 1,3-Cyclohexandicarbonsäure sowie deren entsprechend substituierte Derivate erwähnt.

Weiterhin als Ausgangsstoffe d) geeignet sind dicarboxyfunktionelle Oligomere beispielsweise von Polysulfonen, Polyethersulfonen, Polyetherimiden und Polyaryletherketonen.

Bevorzugt werden aromatische Dicarbonsäuren verwendet.

In der Stufe 1 werden die Komponenten a), b), d) und gegebenenfalls c) mit niederen Fettsäureanhydriden in molarem Überschuß bezogen auf die Hydroxy-, Thio- und Aminogruppen umgesetzt. Geeignete Fettsäureanhydride sind beispielsweise Essigsäureanhydrid, Propionsäureanhydrid oder Buttersäureanhydrid, bevorzugt Essigsäureanhydrid. Vorteilhaft setzt man die Fettsäureanhydride in einem Überschuß von 5 bis 60 Mol.%, bezogen auf die vorgenannten Gruppen ein. Die Umsetzung wird bei einer Temperatur von 140 bis 280° C unter Abdestillieren von gebildeten Fettsäuren und überschüssigen Fettsäureanhydriden durchgeführt. In der Regel steigt die Temperatur während der Umsetzung von 140° C auf 280° C in dem Maße, wie Fettsäuren und Fettsäureanhydride abdestilliert werden. Es hat sich als vorteilhaft erwiesen, die abzudestillierenden Fettsäuren und Fettsäureanhydride über eine Kolonne, z.B. von 2 bis 10 Böden abzudestillieren, um das Mitreißen von Ausgangsverbindungen zu vermeiden. Die Verweildauer beträgt in der Regel 2 bis 4 Stunden. Hierbei erhält man ein Oligomerengemisch, das vorteilhaft eine inhärente Viskosität von 0,1 bis 0,3 hat. Zweckmäßig wird die Umsetzung wechselseitig z.B. in zwei parallel geschalteten Rührkesseln durchgeführt. Vorteilhaft führt man die Umsetzung in mehreren z.B. 2 bis 4 hintereinander geschalteten Kesseln durch.

In einer 2. Stufe wird das Oligomerengemisch aus der Stufe 1 von oben nach unten durch eine im wesentlichen senkrechte rohrförmige Präkondensationszone geleitet. Die Präkondensationszone hat vorteilhaft einen Durchmesser von 2 bis 5 cm und ein Verhältnis von Länge zu Durchmesser von 300 bis 50:1. Hierbei hält man eine Temperatur von 250 bis 370° C, insbesondere von 280 bis 370° C ein. Ferner hält man eine Verweilzeit von 3 bis 30 Minuten, insbesondere von 5 bis 20 Minuten sowie einen Druck von 0,5 bis 100 mbar, insbesondere von 5 bis 50 mbar ein. Die Druckangabe bezieht sich auf den Endteil der Präkondensationszone, da das Ausgangsgemisch mit einem höheren Druck, z.B. von 0,5 bis 10 bar oben in die Präkondensationszone zugeführt wird und der Druck im Verlauf der Präkondensationszone auf den vorgenannten Wert abnimmt. Während der Präkondensation verdampfen Fettsäuren unter Bildung eines zweiphasigen Gemisches aus Präkondensat und dampfförmigen Fettsäuren. Es versteht sich, daß auch mehrere rohrförmige Präkondensationszonen parallel geschaltet, z.B. als Röhrenbündel, bei der technischen Ausführung zweckmäßig sind.

Um eine gute Durchmischung des zweiphasigen Gemisches aus Präkondensat und dampfförmigen Fettsäuren zu erzielen, ist die Präkondensationszone mit Einbauten versehen. Die Einbauten haben eine freie Oberfläche von 0,3 bis 1,5 $m^2/l$, insbesondere von 0,5 bis 1,4 $m^2/l$. Geeignete Einbauten sind beispielsweise Füllkörper wie Raschigringe oder Pallringe. Besonders vorteilhaft hat es sich erwiesen, wenn im ersten Drittel der Präkondensationszone von oben gerechnet die Einbauten eine freie Oberfläche von 1,1 bis 1,4 $m^2/l$ haben und in den restlichen zwei Dritteln eine freie Oberfläche von 0,5 bis 0,8 $m^2/l$ aufweisen.

Das aus der Präkondensationszone austretende Präkondensat hat in der Regel eine inhärente Viskosität von 0,2 bis 0,5, insbesondere von 0,25 bis 0,45.

Das aus der Präkondensationszone austretende zweiphasige Gemisch aus Dämpfen von Fettsäuren und Präkondensat wird in der Stufe 3 getrennt. Die Trennung erfolgt in der Regel von selbst aufgrund der physikalischen Unterschiede in einem Abscheider, wobei der untere Teil des Abscheiders vorteilhaft als Kondensationszone ausgebildet ist. Die freiwerdenden Brüden bestehen im wesentlichen aus niederen Fettsäuren, die sich von den eingesetzten niederen Fettsäureanhydriden ableiten. Die Brüden werden in der Regel kondensiert und gegebenenfalls nach Reinigung anderweitig verwendet.

In der Stufe 4 wird das erhaltene Präkondensat vorzugsweise in dem Abscheider bei einer Temperatur von 250 bis 360° C, insbesondere von 270 bis 350° C unter Einhalten einer Verweilzeit von 10 bis 60 Minuten, insbesondere von 15 bis 45 Minuten unter unter einem Druck von 0,5 bis 100 mbar, insbesondere von 5 bis 50 mbar weiterkondensiert, und ein granulierfähiges Polykondensat erhalten. Das so erhaltene Polykondensat hat in der Regel eine inhärente Viskosität von 0,3 bis 1. Es versteht sich, daß die angewandte Kondensationstemperatur über dem Schmelzpunkt des jeweils herzustellenden Polykondensats liegt.

Um hochmolekulare Polykondensate zu erhalten, leitet man nach einer bevorzugten Arbeitsweise das so erhaltene amorphe Polykondensat schmelzflüssig in eine weitere Kondensationszone, z.B. einen Extruder mit Entgasungseinrichtungen, kondensiert dort unter fortlaufender Ausbildung neuer Oberflächen bei einer Temperatur von 220 bis 380° C und ein Druck, z.B. von 100 bis 1 mbar bis zur gewünschten Viskosität.

Nach einer anderen bevorzugten Arbeitsweise wird die Kondensation von teilkristallinen Polykondensaten zu hochmolekularen Polykondensaten in der Festphase durchgeführt. Das in Strängen gegossene und granulierte Polykondensat aus der Stufe 4 wird mittels erhitzten Inertgasen wie Stickstoff oder Kohlendioxid, insbesondere Stickstoff, oder unter vermindertem Druck bei einer Temperatur von 10 bis 80° C unter dem Schmelzpunkt des jeweils zu kondensierenden Produkts bis zur gewünschten Viskosität kondensiert.

Übliche Zusätze wie Mattierungsmittel, z.B. Titandioxid oder Stabilisatoren, ferner Zusätze von faser-oder teilchenförmigen Füllstoffen, gegebenenfalls weiteren Polymeren, Flammschutzmitteln, werden vorzugsweise dem aus der Stufe 4 ausgetragenen Polykondensat, z.B. in einem Extruder zugemischt und dann das erhaltene Granulat der Festphasenkondensation zugeführt.

Nach dem erfindungsgemäßen Verfahren lassen sich durch geeignete Kombination der Ausgangsstoffe Polyester, Polyesteramide, Polyesterimide, Polyestercarbonate, Polyetherester, Polyetheresteramide, Polyesteramidimide, Polyestercarbamide und Polyetheresterimide herstellen.

Besonders geeignet ist das erfindungsgemäße Verfahren zur Herstellung von thermotrop mesomorphen vollaromatischen Polykondensaten. Die thermotrop mesomorphen Eigenschaften lassen sich leicht nach dem in der DE-A-25 20 819 beschriebenen Verfahren bestimmen.

Beispiele für nach dem erfindungsgemäßen Verfahren erhältliche thermotrop mesomorphen Polykondensate sind beispielsweise

1. Thermotrop mesomorphe Polyester aus

1a) 10 bis 25 Mol.% wiederkehrenden Einheiten der Formel

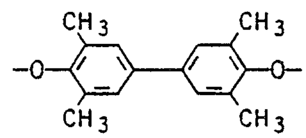

Als Ausgangsstoff wird vorteilhaft 3,3′,5,5′-Tetramethyl-4,4′-dihydroxydiphenyl verwendet.

1b) 5 bis 15 Mol.% wiederkehrenden Einheiten der Formel

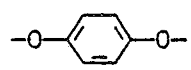

Als bevorzugte Ausgangsverbindung wird Hydrochinon verwendet.

1c) 5 bis 15 Mol.% wiederkehrenden Einheiten der Formel

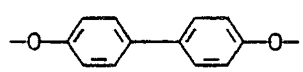

Als Ausgangsverbindung wird z.B. 4,4′-Dihydroxydiphenyl verwendet.

1d) mindestens 10 Mol.% wiederkehrenden Einheiten der Formel

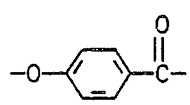

Als bevorzugte Ausgangsverbindung wird 4-Hydroxybenzoesäure verwendet.

1e) einer der Summe aus 1a), 1b) und 1c) entsprechenden molaren Menge an wiederkehrenden Einheiten der Formel

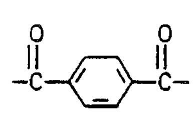

Als geeignete Ausgangsverbindung wird z.B. Terephthalsäure verwendet.

In bevorzugten vollaromatischen Polyestern dieses Typs ist ein Teil der Einheiten b) und/oder c), ersetzt durch

1f) wiederkehrende Einheiten der Formel

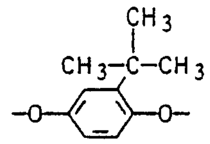

Ein geeigneter Ausgangsstoff hierfür ist z.B. tert.-Butylhydrochinon
und/oder

1g) wiederkehrenden Einheiten der Formel

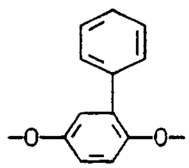

Als bevorzugte Ausgangsverbindung wird Phenylhydrochinon verwendet.

Vorteilhaft enthalten solche vollaromatischen Polyester die wiederkehrenden Einheiten 1f) und/oder 1g) in einer Menge von 2 bis 20 Mol.%. Ferner hat es sich als vorteilhaft erwiesen, wenn die Summe der molaren Anteile der Einheiten 1a) und 1f) und/oder 1g) von 20 bis 40 Mol.% beträgt.

In anderen bevorzugten vollaromatischen Polyestern ist ein Teil der Einheiten 1b) und/oder 1c) ersetzt durch

1h) wiederkehrende Einheiten der Formel

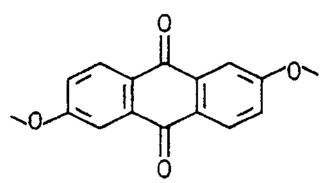

1i) wiederkehrenden Einheiten der Formel

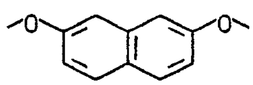

1j) wiederkehrenden Einheiten Formel

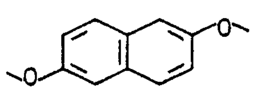

und/oder

1k) wiederkehrenden Einheiten der Formel

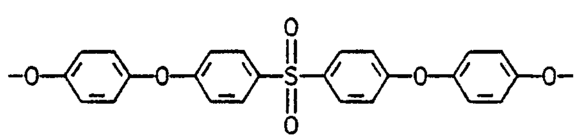

Als Ausgangsstoff für die Komponente 1h) wird 2,6-Dihydroxyanthrachinon, für die Komponente 1i) 2,7-Dihydroxynaphthalin, für die Komponente 1j) 2,6-Dihydroxynaphthalin und für die Komponente 1k) 4,4'-Di-(p-hydroxyphenoxy)diphenylsulfon verwendet.

Es hat sich bewährt, wenn an den erfindungsgemäßen Polyestern die Summe der molaren Anteile an

den Einheiten 1a), 1h), 1i), 1j) und 1k) 20 bis 40 Mol.% beträgt.

Auf die Summe der Dihydroxyverbindungen wird vorteilhaft jeweils die äquivalente Menge Terephthalsäure verwendet.

2. Thermotrop mesomorphe Polyester aus

2a) 5 bis 35 Mol.% wiederkehrenden Einheiten der Formel

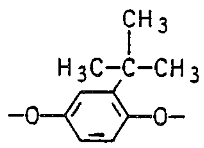

Als Ausgangsverbindung verwendet man t-Butylhydrochinon.

2b) 3 bis 15 Mol.% wiederkehrenden Einheiten der Formel

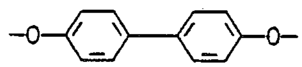

Als Ausgangsverbindung verwendet man 4,4′-Dihydroxybiphenyl.

2c) einer der Summen aus 2a) und2 b) entsprechenden molaren Menge an wiederkehrenden Einheiten der Formel

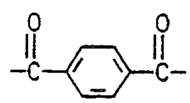

Als Ausgangsverbindung verwendet man Terephthalsäure.

2d) mindestens 10 Mol.% wiederkehrenden Einheiten der Formel

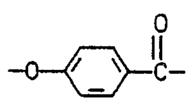

Als Ausgangsverbindung verwendet man p-Hydroxybenzoesäure.
In bevorzugten Polyestern dieses Typs ist ein Teil, der Einheiten b) ersetzt durch

2e) wiederkehrenden Einheiten der Formel

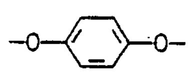

Eine geeignete Ausgangsverbindung ist Hydrochinon, und/oder

2f) wiederkehrenden Einheiten der Formel

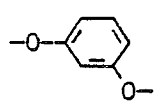

Eine geeignete Ausgangsverbindung ist Resorcin, und/oder

2g) wiederkehrenden Einheiten der Formel

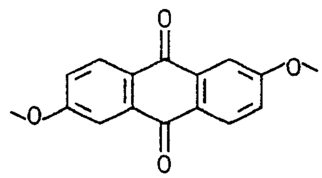

Eine geeignete Ausgangsverbindung ist 2,6-Dihydroxyanthrachinon und/oder

2h) wiederkehrenden Einheiten der Formel

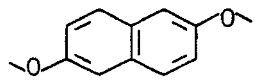

Als geeignete Ausgangsverbindung wird 2,6-Dihydroxynaphthalin verwendet.

In derartigen Polyestern sind die Einheiten 2e), 2f) und/oder 2g) vorteilhaft in einer Menge von 5 bis 12 Mol.% enthalten. Ferner hat es sich als vorteilhaft erwiesen, wenn der molare Anteil an Einheiten 2a) 15 bis 25 Mol.% beträgt. In besonders vorteilhaften Polyestern beträgt der molare Anteil der Summe von 2a) sowie eine oder mehrere Einheiten 2e), 2f) und 2g) 25 bis 35 Mol.%.

Es hat sich als vorteilhaft erwiesen, wenn ein Teil der Einheiten 2c) durch Einheiten der Formel

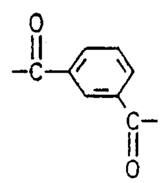

ersetzt ist.

Als geeignete Ausgangsverbindung wird Isophthalsäure verwendet. Es versteht sich, daß auf die Summe der Hydroxyverbindungen jeweils vorteilhaft die äquivalente Menge Terephthalsäure und/oder Isophthalsäure verwendet wird.

3. Thermotrop mesomorphe Polyetherester aus

3a) mindestens 10 Mol.% wiederkehrenden Einheiten der Formel

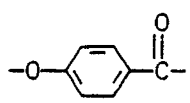

als Ausgangsstoff wird z.B. p-Hydroxybenzoesäure verwendet,

3b) einer Summe aus c) und d) entsprechend der molaren Menge an wiederkehrenden Einheiten der Formel

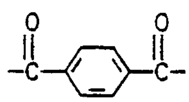

wobei als bevorzugte Ausgangsverbindung Terephthalsäure verwendet wird,

3c) 5 bis 20 Mol.% wiederkehrende Einheiten der Formel

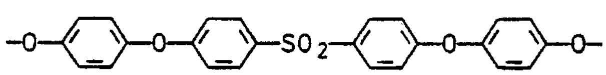 ,

als Ausgangsverbindung wird z.B. 4,4′-Di(p-hydroxyphenoxy)-diphenylsulfon verwendet und

3d) 10 bis 30 Mol.% wiederkehrenden Einheiten der Formel

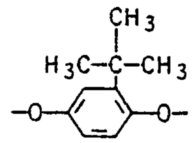

,

als Ausgangsverbindung wird vorteilhaft tert.-Butylhydrochinon verwendet.

Bevorzugte Polyetherester dieses Typs enthalten neben der Komponente 3a), 10 bis 15 Mol.% Komponente 3c), 15 bis 25 Mol.% Komponente 3d) sowie eine der Summe aus 3c) und 3d) äquivalente molare Menge der Komponente 3b).

Ein Teil der Einheiten 3d) kann ersetzt werden durch

3e) wiederkehrende Einheiten der Formel

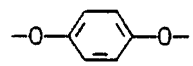

,

als Ausgangsverbindung wird z.B. Hydrochinon verwendet, und/oder

3f) wiederkehrende Einheiten der Formel

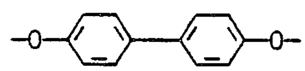

,

als geeignete Ausgangsverbindung wird bevorzugt 4,4′-Dihydroxydiphenyl verwendet und/oder

3g) wiederkehrende Einheiten der Formel

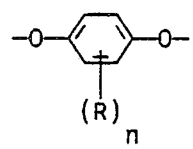

in R jeweils einen Methylrest, Phenylrest oder ein Chloratom bezeichnet und n 1, 2 oder 3 bedeutet, ersetzt werden.

Geeignete Ausgangsverbindungen sind Methylhydrochinon, Trimethylhydrochinon, Phenylhydrochinon und Chlorhydrochinon,

Vorteilhaft enthalten solch vollaromatischen Polyetherester die wiederkehrenden Einheiten 3e) und/oder 3f) in einer Menge von 5 bis 10 Mol.%. In einer anderen bevorzugten Zusammensetzung einthalten die vollaromatischen Polyetherester die Komponente 3g) in einer Menge von 5 bis 20 Mol.%.

4. Polyestercarbamide, aufgebaut aus

4a) mindestens 20 Mol.% wiederkehrenden Einheiten der Formel

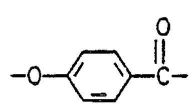

,

eine geeignete Ausgangsverbindung ist z.B. p-Hydroxybenzoesäure;

4b) 5 bis 15 Mol.% wiederkehrenden Einheiten der Formel

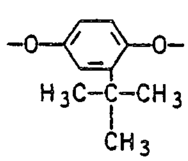

,

eine geeignete Ausgangsverbindung ist beispielsweise t-Butylhydrochinon;

4c) 5 bis 15 Mol.% wiederkehrenden Einheiten der Formel

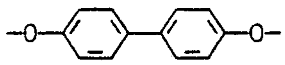

,

eine geeignete Ausgangsverbindung ist z.B. 4,4′-Dihydroxydiphenyl;

4d) 1 bis 10 Mol.% wiederkehrenden Einheiten der Formel

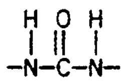

,

eine bevorzugte Ausgangsverbindung ist Harnstoff;

4e) einer der Summe aus 4b), 4c) und 4d) entsprechenden molaren Menge an wiederkehrenden Einheiten der Formel

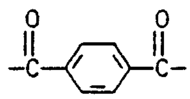

,

eine geeignete Ausgangsverbindung ist beispielsweise Terephthalsäure.

Ein Teil der wiederkehrenden Einheiten 4b) kann ersetzt werden durch

4f) wiederkehrende Einheiten der Formel

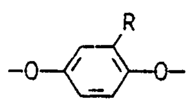

in der R einen $C_1$- bis $C_4$-Alkylrest, ausgenommen tert.-Butyl, ein Halogenatom oder einen Phenylrest, der gegebenenfalls Methylgruppen als Substituenten enthalten kann, bedeutet.

Geeignete Ausgangsverbindungen sind beispielsweise Methylhydrochinon, Ethylhydrochinon, Isopropylhydrochinon, Chlorhydrochinon oder Phenylhydrochinon.

Vorteilhaft beträgt der Gehalt an wiederkehrenden Einheiten 4f) 2 bis 10 Mol.%.

Es hat sich ferner als vorteilhaft erwiesen, wenn in den Polyestercarbamiden der molare Anteil der Summe der Komponenten 4b) und 4d) 15 bis 20 Mol.% beträgt.

In anderen Polyestercarbamiden ist ein Teil der Komponente 4c) ersetzt durch mindestens eine der wiederkehrenden Einheiten der Formeln

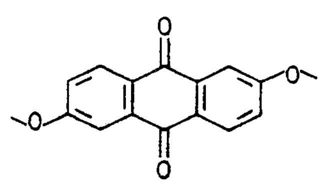

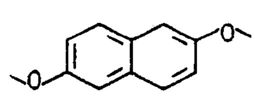

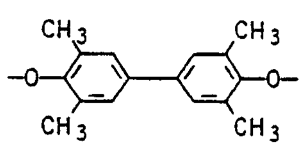

Geeignete Ausgangsverbindungen für diese wiederkehrenden Einheiten der Formeln sind 2,6-Dihydroxyanthrachinon, 2,6-Dihydroxynaphthalin und 3,3′-5,5′-Tetramethyl-4,4′-dihydroxybiphenyl. Vorteilhaft beträgt der Anteil dieser wiederkehrenden Einheiten der Formeln insgesamt 2 bis 10 Mol.%.

5. Polyester aus

5a) mindestens 10 Mol.% wiederkehrenden Einheiten der Formel

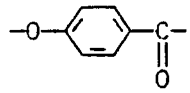

,

wobei als Ausgangsverbindung 4-Hydroxibenzoesäure verwendet wird;

5b) einer der Summe aus den Komponenten 5c) und 5d) äquivalenten molaren Menge an wiederkehrenden Einheiten der Formel

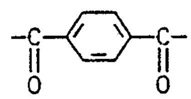

,

als Ausgangsverbindung wird vorteilhaft Terephthalsäure verwendet;

5c) 3 bis 20 Mol.% wiederkehrenden Einheiten der Formeln

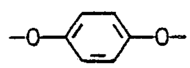

,

als Ausgangsverbindung wird z.B. Hydrochinon verwendet;

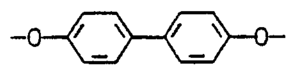

als Ausgangsverbindung wird z.B. 4,4′-Dihydroxibiphenyl verwendet;

5d) 5 bis 30 Mol.% wiederkehrenden Einheiten der Formel

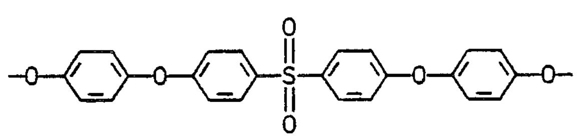

wobei als Ausgangsverbindung vorteilhaft 4,4′-Di-(p-hydroxiphenoxy)-diphenylsulfon verwendet wird.

Bevorzugte Polyetherester sind aufgebaut aus mindestens 20 Mol.%, vorteilhaft bis zu 50 Mol.% der Komponente 5a), 10 bis 25 Mol.% der Komponente 5d), 5 bis 15 Mol.% der Komponente 5c) und einer der Summe aus 5c und 5d) entsprechenden äquimolaren Menge der Komponente 5 b). Vorteilhaft enthalten die Polyetherester als Komponente 5c) 5 bis 15 Mol wiederkehrende Einheiten die sich von Hydrochinon oder einer Mischung aus Hydrochinon und Dihydroxydiphenyl ableiten.

6. Polyesteramide aus

6a) 5 bis 35 Mol.% wiederkehrenden Einheiten der Formel

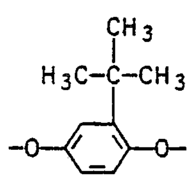

6b) 5 bis 15 Mol.% wiederkehrenden Einheiten der Formel

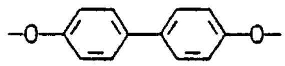

6c) einer der Summe der Komponenten 6a) und 6b) und gegebenenfalls 6e), entsprechenden molare Menge an wiederkehrenden Einheiten der Formel

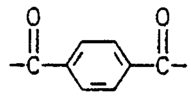

6d) mindestens 10 Mol.% wiederkehrenden Einheiten der Formel

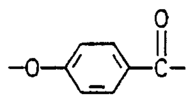

6e) 2 bis 15 Mol.% wiederkehrenden Einheiten der Formeln

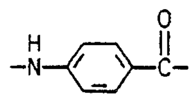

oder

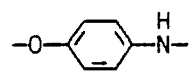

wobei die wiederkehrenden Einheiten der letzten Formel zum Teil ersetzt sein können durch wiederkehrende Einheiten der Formel

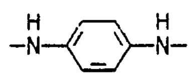

mit der Maßgabe, daß die Summe der molaren Anteile der Komponenten 6a), 6b), 6c), 6d) und 6e) jeweils 100 Mol.% ergibt.

Die wiederkehrenden Einheiten 6a) bis 6e) leiten sich vorzugsweise von folgenden Ausgangsverbindungen ab:

6a) t-Butylhydrochinon
6b) 4,4′-Dihydroxydiphenyl
6c) Terephthalsäure
6d) p-Hydroxybenzoesäure
6e) p-Aminobenzoesäure, p-Aminophenol und 1,4-Diaminobenzol.

7. Polyesteramide, aufgebaut aus

7a) 3 bis 30 Mol.% wiederkehrenden Einheiten der Formel

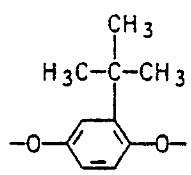

7b) 3 bis 30 Mol.% wiederkehrenden Einheiten der Formeln

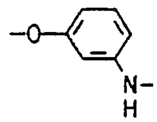 ,

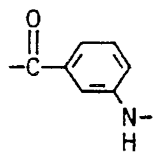 ,

7c) 2 bis 25 Mol.% mindestens einer der wiederkehrenden Einheiten der Formeln

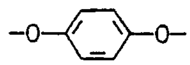 ,

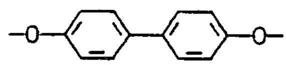 und

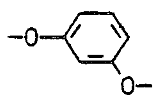 ,

7d) einer der Summe aus den Komponenten 7a), 7b) und 7c), ausgenommen der zweiten wiederkehrenden Einheiten der Formel 7b) entsprechenden molaren Menge an wiederkehrenden Einheiten der Formel

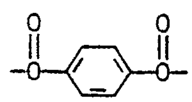 ,

wobei gegebenenfalls ein Teil dieser wiederkehrenden Einheiten durch solche der Formel

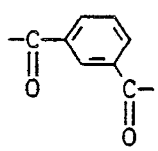 ,

ersetzt sein kann,

7e) gegebenenfalls 5 bis 25 Mol.% wiederkehrenden Einheiten der Formel

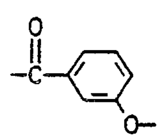 ,

7f) wiederkehrenden Einheiten der Formel

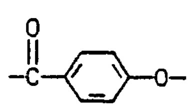 ,

wobei sich die molaren Anteile der Komponenten 7a) bis 7f) jeweils auf 100 Mol.% ergänzen.

Die Einheiten 7a) bis 7f) leiten sich vorzugsweise ab von

7a): t-Butylhydrochion

7b): m-Aminophenol oder m-Aminobenzoesäure,

7c): Hydrochinon, 4,4′-Dihydroxidiphenyl oder Resorcin,

7d): Terephthalsäure oder Isophthalsäure

7e): m-Hydroxybenzoesäure und

7f): p-Hydroxybenzoesäure.

Bevorzugte Polyesteramide enthalten 5 bis 20 Mol.% wiederkehrende Einheiten 7a), 5 bis 20 Mol.% wiederkehrende Einheiten der Formel 7b), die sich vom n-Aminophenol ableiten und 5 bis 20 Mol.% der Formel 7c), insbesondere solche Einheiten 7c) die sich von Hydrochinon ableiten, sowie der entsprechenden Menge an wiederkehrenden Einheiten der Formeln 7d und außerdem wiederkehrenden Einheiten 7f.

Andere bevorzugte Polyesteramide enthalten 5 bis 20 Mol.% Einheiten 7a), 5 bis 20 Mol.% Einheiten 7b), die sich von m-Aminobenzoesäure ableiten sowie 5 bis 20 Mol.% wiederkehrende Einheiten 7c), die sich von Hydrochinon und 4,4′-Dihydroxydiphenyl ableiten, sowie die sich vom m-Aminophenol ableiten.

Weitere bevorzugte Polyesteramide enthalten 5 bis 20 Mol.% Einheiten 7a), 5 bis 20 Mol.% Einheiten 7b), die sich von m-Aminobenzoesäure ableiten und 5 bis 20 Mol.% Einheiten 7c), die sich von Hydrochinon ableiten, sowie die sich vom n-Aminophenol ableiten.

8. Polyesteramide, aufgebaut aus

8a) 3 bis 30 Mol.%, insbesondere 5 bis 25 Mol.% wiederkehrenden Einheiten der Formel

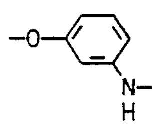 ,

eine geeignete Ausgangsverbindung ist m-Aminophenol;

8b) 3 bis 25 Mol.%, vorzugsweise 5 bis 20 Mol.% mindestens eine der wiederkehrenden Einheiten der Formeln

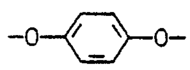 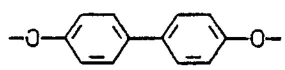 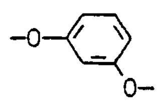 ,

geeignete Ausgangsverbindungen sind beispielsweise Hydrochinon, 4,4′-Dihydroxibiphenyl und Resorcin. Besonders bevorzugt sind wiederkehrende Einheiten die sich von Hydrochinon oder 4,4′-Dihydroxydiphenyl oder deren Mischungen ableiten,

8c) einer der Summe der Komponenten 8a) und 8b) entsprechenden molaren Menge an wiederkehrenden Einheiten der Formeln

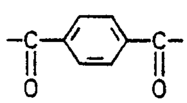 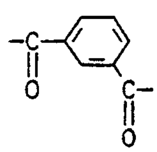 ,

geeignete Ausgangsverbindungen sind beispielsweise Terephthalsäure und Isophthalsäure.

8d) wiederkehrenden Einheiten, die sich von p-Hydroxibenzoesäure ableiten, vorteilhaft in einer Menge von mindestens 10 Mol.%, insbesondere mindestens 20 Mol.%;

8e) gegebenenfalls 5 bis 25 Mol.%, insbesondere 5 bis 15 Mol.% wiederkehrenden Einheiten der Formel

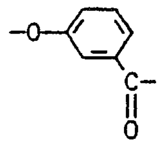

,

eine geeingete Ausgangsverbindung ist beispielsweise m-Hydroxibenzoesäure.

9. Polyesterimide aufgebaut aus

9a) 5 bis 35 Mol.% insbesondere 7 bis 31 Mol.% wiederkehrenden Einheiten der Formeln

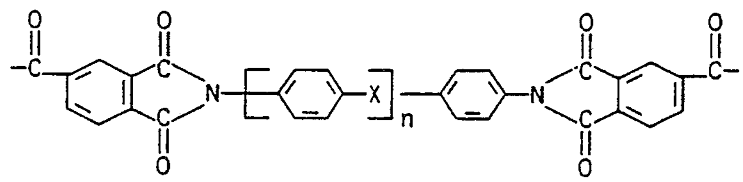

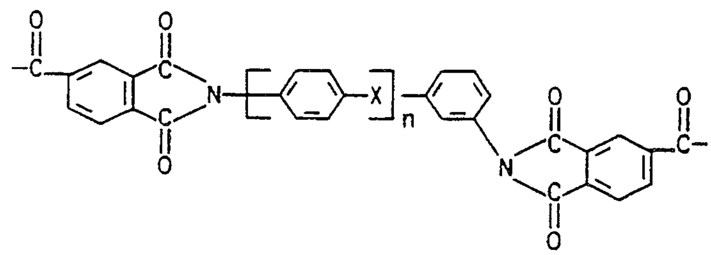

X und n können jeweils gleich oder verschieden sein. X steht für -O-, -S-, $-SO_2-$, -CO-, $-CH_2-$, $-C(CH_3)_2-$, insbesondere für -O-, $-SO_2-$, $-CH_2-$und n bedeutet 0 oder 1, insbesondere 1. Geeignete Ausgangsverbindungen sind beispielsweise
4,4'-Di-[(4-carboxy)-N-phthalimido]diphenylether,
4,4'-Di-[(4-carboxy)-N-phthalimido]diphenylmethan,
4,4'-Di-[(4-carboxy)-N-phthalimido]diphenylsulfon,
4,4'-Di-[(4-carboxy)-N-phthalimido]diphenylsulfid,
4,4'-Di-[(4-carboxy)-N-phthalimido]diphenylketon,
3,4'-Di-[(4-carboxy)-N-phthalimido]diphenylether,
3,4'-Di-[(4-carboxy)-N-phthalimido]diphenylsulfid,
3,4'-Di-[(4-carboxy)-N-phthalimido]diphenylsulfon,
3,4'-Di-[(4-carboxy)-N-phthalimido]diphenylketon,
3,4'-Di-[(4-carboxy)-N-phthalimido]diphenylmethan;

9b) 0 bis 30 Mol.%, insbesondere 0 bis 20 Mol.% wiederkehrenden Einheiten der Formeln

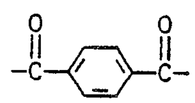 oder 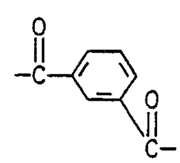 ,

geeignete Ausgangsverbindungen für diese Einheiten sind Terephthalsäure und Isophthalsäure;

9c) einer der Summe aus den Komponenten 9a) und 9b) entsprechenden molaren Menge mindestens einer der wiederkehrenden Einheiten der folgenden Formeln

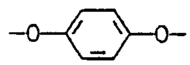 , 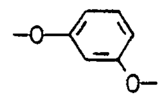 ,

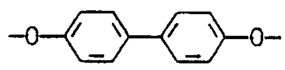 oder

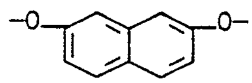 ,

geeignete Ausgangsverbindungen sind beispielsweise Hydrochinon, Resorcin, 4,4′-Dihydroxybiphenyl und 2,7-Dihydroxynaphthalin;

9d) mindestens 10 Mol.%, insbesondere mindestens 20 Mol.% wiederkehrenden Einheiten der Formel

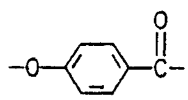 ,

eine geeignete Ausgangsverbindung ist beispielsweise p-Hydroxyenzoesäure;

9e) gegebenenfalls 5 bis 25, insbesondere 10 bis 20 Mol.% wiederkehrenden Einheiten der Formeln

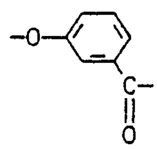 ,

eine geeignete Ausgangsverbindung ist beispielsweise m-Hydroxybenzoesäure.

Bevorzugte Polyesterimide enthalten als Komponente 9c) 10 bis 31 Mol.% wiederkehrende Einheiten, die sich von Hydrochinon ableiten, und/oder 5 bis 25 Mol.% wiederkehrende Einheiten, die sich von den anderen unter 9c) aufgeführten Ausgangsverbindungen ableiten. Besonders bevorzugt als Komponente 9c) sind wiederkehrende Einheiten, die sich von Hydrochinon, Resorcin und/oder 4,4′-Dihydroxydiphenyl sowie Mischungen derselben, ableiten.

10. Polyesteramidimide aufgebaut aus

10a) 5 bis 35 Mol.%, insbesondere 7 bis 25 Mol.% wiederkehrenden Einheiten der Formeln

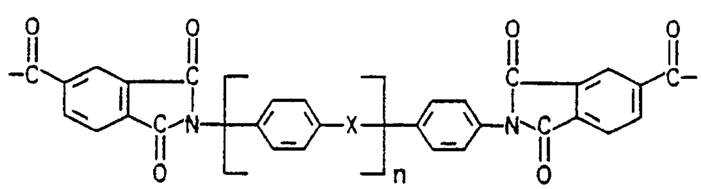

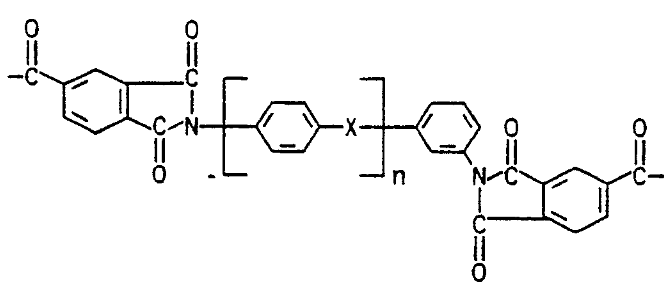 ,

wobei geeignete Ausgangsverbindungen die gleichen wie die vorstehend für Einheiten 9a) der Polyesterimide 9a) genannten Verbindungen sind;

10b) 0 bis 30 Mol.%, insbesondere 0 bis 20 Mol.% wiederkehrenden Einheiten der Formeln

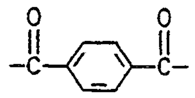

und/oder

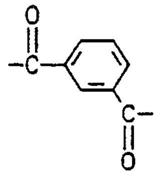

,

wobei beispielsweise Terephthalsäure und Isophthalsäure geeignete Ausgangsverbindungen sind;

10c)einer der Summe der Komponenten 10a) und 10b) entsprechenden molaren Menge mindestens einer der wiederkehrenden Einheiten der folgenden Formeln

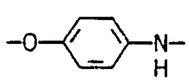

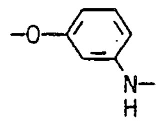

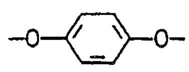

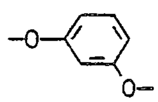

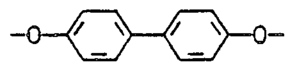

wobei als Ausgangsverbindungen p-Aminophenol, m-Aminophenol, Hydrochinon, Resorcin und 4,4′-Dihydroxidiphenyl zu nennen sind.

10d)gegebenenfalls 5 bis 25 Mol.%, insbesondere 5 bis 20 Mol.% mindestens einer der wiederkehrenden Einheiten der Formeln

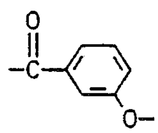

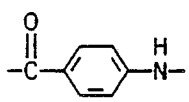

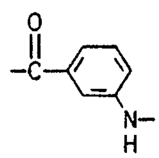

wobei geeignete Ausgangsverbindungen m-Hydroxibenzoesäure p-Aminobenzoesäure und m-Aminobenzoesäure sind;

10e)wiederkehrenden Einheiten, insbesondere in einer Menge von mindestens 10 Mol.%, der Formel

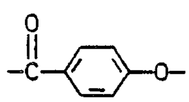

wobei p-Hydroxibenzoesäure als geeignete Ausgangsverbindung zu nennen ist.

Es versteht sich, daß die Summe der Molprozente aus der Komponenten 10a) bis 10e) jeweils 100 Mol.% ergibt.

Vorteilhaft enthalten die erfindungsgemäßen Polyesteramidimide als Komponente 10c) 5 bis 20 Mol.% wiederkehrende Einheiten, die sich von m-Aminophenol ableiten, und/oder 2 bis 8 Mol.% wiederkehrende Einheiten die sich von p-Aminophenol und/oder 5 bis 20 Mol.% mindestens einer der wiederkehrenden Einheiten, die sich von Hydrochinon, Resorcin und 4,4′-Dihydroxydiphenyl ableiten.

Besonders bevorzugt sind Polyesteramidimide, die als Komponente 10c) 5 bis 20 Mol.% wiederkehrende Einheiten, die sich von m-Aminophenol sowie 5 bis 15 Mol.% wiederkehrende Einheiten die sich von Hydrochinon und ggf. 5 bis 15 Mol.% wiederkehrende Einheiten , die sich von 4,4′-Dihydroxydiphenyl ableiten, enthalten.

11. Polyesterimide aufgebaut aus

11a)5 bis 35 Mol.%, insbesondere 7 bis 25 Mol.%, wiederkehrenden Einheiten der Formeln

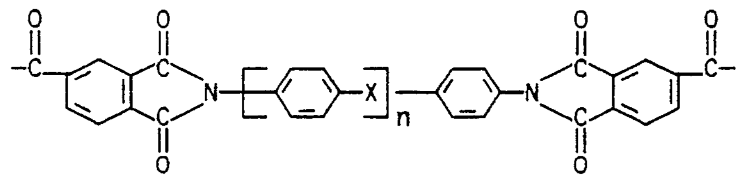

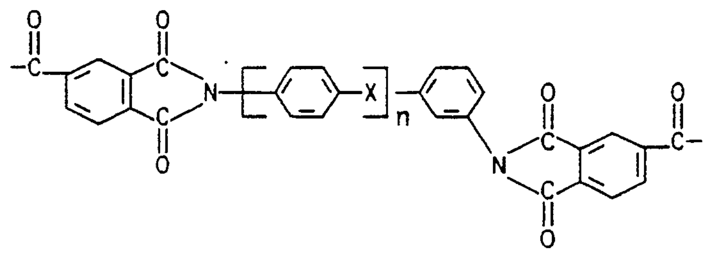

in denen x gleich oder verschieden sein kann und x jeweils -O-, -S-, $-SO_2-$, -CO-, $-CH_2$, $-C(CH_3)_2$ bedeutet und n für 0 oder 1 steht;
geeignete Ausgangsverbindungen sind bei Polymeren des Typs 9 für die Einheiten 9a) aufgeführt;

11b)0 bis 30 Mol.%, insbesondere 0 bis 20 Mol.% wiederkehrende Einheiten der Formeln

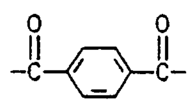 und/oder 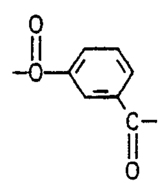 ,

wobei Terephthalsäure und Isophthalsäure als Ausgangsverbindungen zu nennen sind;

11c)einer der Summe aus den Komponenten 11a) und 11b) entsprechenden molaren Menge an aromatischen Dihydroxyverbindungen, nämlich
3 bis 35 Mol.% wiederkehrenden Einheiten der Formel

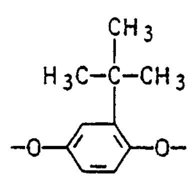

wobei als geeignete Ausgangsverbindung tert.-Butylhydrochinon verwendet werden kann,
sowie mindestens eine der folgenden wiederkehrenden Einheiten in einer Menge von 2 bis 25 Mol.%.

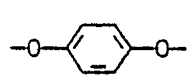 und 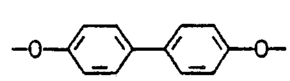

wobei als Ausgangsverbindungen Hydrochinon und 4,4′-Dihydroxydiphenyl zu nennen sind,
sowie 0 bis 25 Mol.% wiederkehrenden Einheiten der Formel

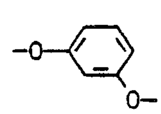

wobei als geeignete Ausgangsverbindung Resorcin zu nennen ist.

11d)gegebenenfalls 5 bis 25 Mol.%, insbesondere 5 bis 20 Mol.% wiederkehrenden Einheiten der Formel

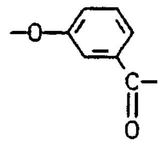

,

eine geeignete Ausgangsverbindung ist beispielsweise m-Hydroxybenzoesäure;

11d)wiederkehrende Einheiten der folgenden Formel, vorteilhaft in einer Mindestmenge von 10 Mol.%

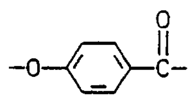

,

wobei p-Hydroxyhbenzoesäure als Ausgangsverbindung eingesetzt werden kann.

Es versteht sich, daß die Summe der molaren Anteile der Kompoennten 11a), 11b), 11c), 11d) und 11e) jeweils 100 Mol.% ergibt.

Vorteilhafte Polyesterimide enthalten als Komponenten 11c) 5 bis 25 Mol.% von t-Butylhydrochinon abgeleitete wiederkehrende Einheiten sowie 5 bis 20 Mol.% mindestens, eine der wiederkehrenden Einheiten, die sich von Hydrochinon, Resorcin oder 4,4′-Dihydroxydiphenyl ableiten.

12. Polyesteramidimide aufgebaut aus

12a)5 bis 35 Mol.% wiederkehrenden Einheiten der Formel

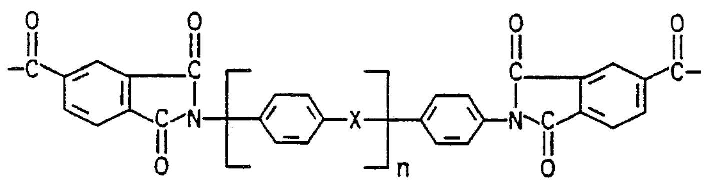

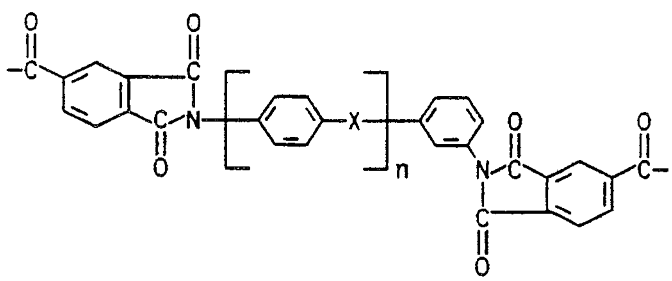

wobei X und n die vorstehend bei den Polymeren 9 für die Einheiten 9a) beschriebene Bedeutung haben;

12b) 0 bis 30 Mol.% wiederkehrenden Einheiten, die sich von Terephthalsäure und/oder Isophthalsäure ableiten;

12c)einer der Summe der Komponenten 12a) und 12b) entsprechenden molaren Menge mindestens einer der folgenden wiederkehrenden Einheiten

12c1) 3 bis 35 Mol.% Einheiten der Formel

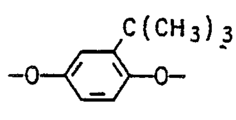

,

12c2) 0 bis 10 Mol.% Einheiten der Formel

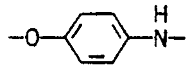

,

12c3) 2 bis 25 Mol.% Einheiten der Formel

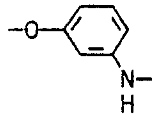

,

12c4) 2 bis 20 Mol.% Einheiten der Formel

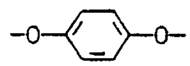

,

12c5) 0 bis 20 Mol.% Einheiten der Formel

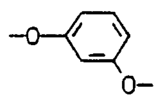

,

und

12c6) 2 bis 20 Mol.% Einheiten der Formel

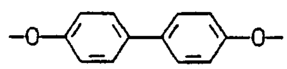

wobei geeignete Ausgangsverbindungen t-Butylhydrochinon, p-Aminophenol, m-Aminophenol, Hydrochinon, Resorcin und 4,4′-Dihydroxydiphenyl sind.

12d)mindestens 10 Mol.% wiederkehrenden Einheiten der Formel

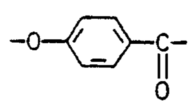

wobei als Ausgangsverbindung p-Hydroxibenzoesäure zu nennen ist; und

12e)0 bis 25 Mol.% mindestens einer der wiederkehrenden Einheiten der Formel

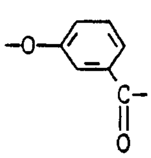

,

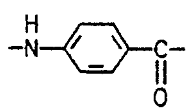

oder

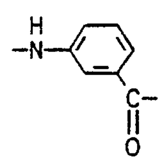

wobei diese Einheiten sich von m-Hydroxybenzoesäure, p-Aminobenzoesäure und m-Aminobenzoesäure ableiten.

13. Polyetheresterimide aufgebaut aus

13a)5 bis 35 Mol.% wiederkehrenden Einheiten der Formel

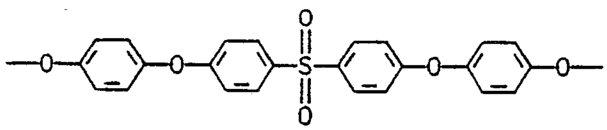

,

wobei 4,4'-Di-(p-hydroxyphenoxy)-diphenylsulfon als geeignete Ausgangsverbindung zu nennen ist;

13b)5 bis 35 Mol.% wiederkehrenden Einheiten der Formeln

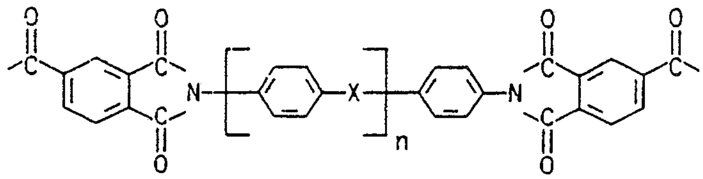

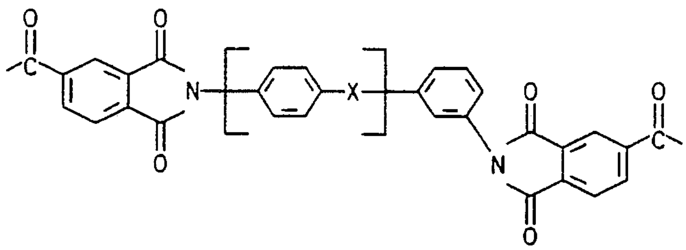

in der X eine chemische Bindung -O-, -S-, $-SO_2-$, -CO-, $-CH_2-$ oder $=C(CH_3)_2$ bezeichnet und n für 0 oder 1 steht. Geeignete Ausgansverbindungen sind bei Polymeren des Typs 9 unter den Einheiten 9a) aufgeführt.

13c)15 bis 30 Mol.% wiederkehrenden Einheiten, die sich von Terephthalsäure ableiten,

13d)einer der Summe aus den Komponenten 13b) plus 13c) minus 13a) entsprechenden molaren Menge an wiederkehrenden Einheiten der Formeln

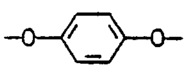 und/oder 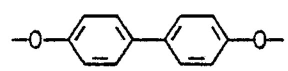 ,

die sich von Hydrochinon und/oder 4,4'-Dihydroxydiphenyl ableiten,

13e)wiederkehrenden Einheiten, die sich von p-Hydroxybenzoesäure ableiten.

Es versteht sich, daß sich die Molprozente der Komponenten 13a) bis 13e) jeweils auf 100 Mol.% ergänzen.

Bevorzugte Polyetheresterimide sind aufgebaut aus
10 bis 30 Mol.% wiederkehrenden Einheiten 13a)
10 bis 30 Mol.% wiederkehrenden Einheiten 13b)
15 bis 30 Mol.% wiederkehrenden Einheiten 13c)
einer der Summe aus 13b) plus 13c) minus 13a) entsprechenden molaren Menge an wiederkehrenden Einheiten 13d) sowie
wiederkehrenden Einheiten der Formel 13e).

Besonders bewährt haben sich Polyetheresterimide die aufgebaut sind aus
15 bis 25 Mol.% wiederkehrenden Einheiten 13a),
15 bis 25 Mol.% wiederkehrenden Einheiten 13b),
20 bis 30 Mol.% wiederkehrenden Einheiten 13c),
einer der Summe aus 13b) plus 13c) minus 13a) entsprechenden molaren Menge an wiederkehrenden Einheiten 13d), insbesondere solche, die sich von Hydrochinon ableiten, und
wiederkehrenden Einheiten 13e), vorteilhaft in einer Menge von mindestens 10 Mol.%.

14. Mesomorphe Polykondensate aufgebaut aus

14a)mindestens 10 Mol.%, vorteilhaft mindestens 20 Mol.% wiederkehrenden Einheiten, die sich von p-Hydroxybenzoesäure ableiten,

14b)5 bis 30 Mol%, vorteilhaft 10 bis 25 Mol.% wiederkehrenden Einheiten, die sich von Methylhydrochinon ableiten,

14c)0 bis 20 Mol.%, insbesondere 2 bis 18 Mol.% mindestens einer der wiederkehrenden Einheiten der Formeln

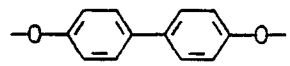

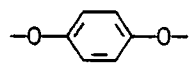

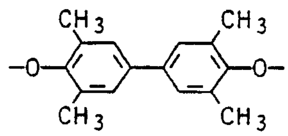

wobei als Ausgangsverbindungen 4,4'-Dihydroxydiphenyl, Hydrochinon und 3,3',5,5'-Tetramethyl-4,4'-dihydroxydiphenyl zu nennen sind,

14d)0 bis 20 Mol.%, vorteilhaft 2 bis 15 Mol.% mindestens einer der wiederkehrenden Einheiten der folgenden Formeln

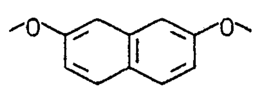 ,

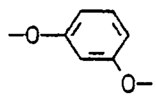 ,

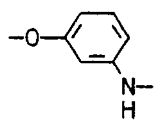 ,

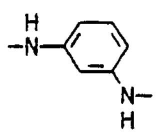 ,

wobei als Ausgangsverbindungen 2,7-Dihydroxynaphthalin, Resorcin, m-Aminophenol und m-Phenylendiamin zu nennen sind,

14e)einer der Summe der Komponenten 14b), 14c) und 14d) entsprechenden molaren Menge an wiederkehrenden Einheiten, die sich von Terephthalsäure ableiten, wobei die Summe der Molprozente der Komponenten 14a), 14b), 14c), 14d) und 14e) jeweils 100 Mol.% ergibt.

Es ist auch möglich, daß ein Teil, z.B. bis zu 50 % der erforderlichen molaren Menge an Einheiten, die sich von Terephthalsäure ableiten, ersetzt sind durch wiederkehrende Einheiten die sich von Isophthalsäure ableiten.

Ferner ist es möglich, einen Teil der Komponenten 14a), z.B. bis zu einer Menge von 15 Mol.% zu ersetzen durch mindestens eine der wiederkehrenden Einheiten der folgenden Formeln

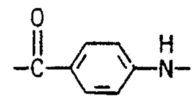

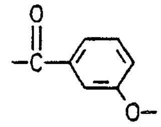

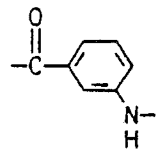

Geeignete Ausgangsverbindungen sind p-Aminobenzoesäure, m-Hydroxybenzoesäure und m-Aminobenzoesäure.

15. Flüssig-kristalline Carbamidgruppen enthaltende Polykondensate, aufgebaut aus

15a)aromatischen Hydroxy- und/oder Aminocarbonsäuren, in denen die Hydroxy- oder Aminogruppe nicht vicinal zur Carboxylgruppe stehen

15b)0,1 bis 20 Mol.% Harnstoff

15c)aromatischen Dihydroxy-, Diamino- und/oder Hydroxy-Aminoverbindungen, in denen die Hydroxy- und Aminogruppen nicht vicinal zueinander angeordnet sind

15d)einer Summe der Komponenten b und c äquivalenten molaren Menge an aromatischen Dicarbonsäuren, in denen die Carboxylgruppen nicht vicinal angeordnet sind.

Bevorzugte Polymere dieses Typs enthalten

15a)mindestens 10 Mol.% mindestens einer der wiederkehrenden Einheiten

O
||
-O-$R^1$- C -   oder

O
H ||
- N -$R^2$- C - in denen $R^1$ und $R^2$ gleich oder verschieden sein können und jeweils einen 1,4-Phenylen-, 1,3-Phenylenrest, 2,7-Naphthylen- oder 2,6-Naphthylenrest bezeichnen

15b)0,1 bis 20 Mol.% wiederkehrende Einheiten der Formel

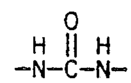

15c)mindestens eine der wiederkehrenden Einheiten der Formel

-X-$R^3$-Y-

in der $R^3$ einen 1,4-Phenylen-, 1,3-Phenylen-, 2,6-Naphthylen-, 2,7-Naphthylen-, 4,4′-Biphenylen-, 3,4′-Biphenylen, 2,6-Anthrachinoylen-rest bezeichnet, wobei die Reste auch Halogenatome, Alkylreste mit 1 bis 4 Kohlenstoffatomen oder einen Phenylrest als Substituenten haben können und darüber hinaus $R^3$ auch für den Rest

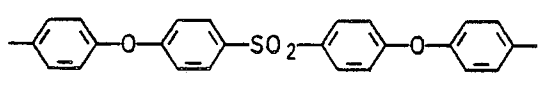

steht und X und Y gleich oder verschieden sein können und jeweils für ein Sauerstoffatom oder den Rest -NH- stehen,

15d)eine der Summe aus den Komponenten 15b) und 15c) äquivalenten Menge an wiederkehrenden Einheiten der Formel

O   O
||   ||
- C -$R^4$- C -in der $R^4$ für einen 1,4-Phenylen-, 1,3-Phenylen-rest oder Reste der folgenden Formeln

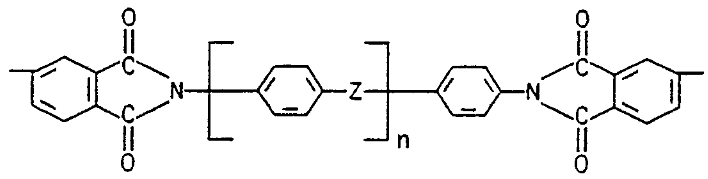

,

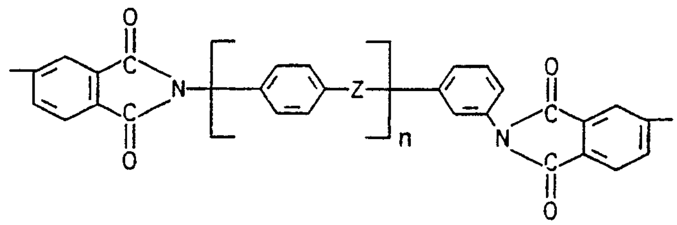

steht, in der Z jeweils für -O-, -S-, $-SO_2-$, -CO-, $-CH_2-$, $=C(CH_3)_2$ steht und n 0 oder 1 bedeutet, oder $R^4$ auch für Reste der Formeln

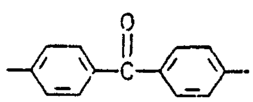

,

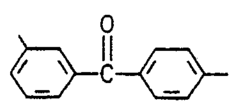

und

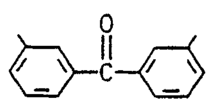

steht.

Bevorzugte Polykondensate dieses Typs sind beispielsweise

15/1. vollaromatische mesomorphe Polyetherestercarbamide, aufgebaut aus

15a) mindestens 10 Mol.% 4-Hydroxy-benzoesäure

15b) 0,5 bis 12 Mol.% Harnstoff

$15c_1$) 3 bis 20 Mol.% Hydrochinon und/oder 4,4'-Dihydroxydiphenyl,

$15c_2$) 5 bis 30 Mol.% 4,4'-Di(p-hydroxyphenoxy)-diphenylsulfon und

15d) einer der Summe der Komponenten 15b) und 15c) entsprechenden äquivalenten molaren Menge an Terephthalsäure.

15/2. Polyestercarbamide, aufgebaut aus

15a) mindestens 10 Mol.% 4-Hydroxy-benzoesäure

15b) 0,1 bis 11 Mol.% Harnstoff

$15c_1$) 10 bis 25 Mol.% 3,3'-5,5'-Tetramethyl-4,4'-dihydroxydiphenyl

$15c_2$) 5 bis 15 Mol.% Hydrochinon

$15c_3$) 5 bis 15 Mol.% 4,4'-Dihydroxydiphenyl und

15d) einer der Summe aus den Komponenten 15b) und 15c) entsprechenden molaren Menge an Terephthalsäure.

15/3. Polyestercarbamide, aufgebaut aus

15a) mindestens 10 Mol.% 4-Hydroxy-benzoesäure

15b) 0,1 bis 7 Mol.% Harnstoff

$15c_1$) 5 bis 35 Mol.% tert.-Butylhydrochinon

$15c_2$) 2 bis 30 Mol.% 4,4'-dihydroxydiphenyl und

15d) einer der Summe aus 15b) und 15c) entsprechenden molaren Menge an Terephthalsäure.

15/4. Polyesteramidcarbamide, aufgebaut aus

15a) mindestens 10 Mol.% 4-Hydroxy-benzoesäure, die teilweise durch 4-Aminobenzoesäure ersetzt sein kann

15b) 0,4 bis 10 Mol.% Harnstoff

15c₁) 3 bis 30 Mol.% tert.-Butylhydrochinon

15c₂) 3 bis 30 Mol.% 3-Aminophenol

15c₃) 2 bis 25 Mol.% mindestens einer der Verbindungen Hydrochinon, 4,4′-Dihydroxydiphenyl, Resorcin und

15d) einer der Summe aus den Komponenten 15b) und 15c) entsprechenden molaren Menge an Terephthalsäure, die teilweise durch Isophthalsäure ersetzt sein kann.

15/5. Polyesteramidcarbamide, aufgebaut aus

15a) mindestens 10 Mol.% 4-Hydroxybenzoesäure und gegebenenfalls 5 bis 25 Mol.% 3-Hydroxybenzoesäure

15b) 0,1 bis 7 Mol.% Harnstoff

15c₁) 3 bis 30 Mol.% 3-Aminophenol

15c₂) 3 bis 25 Mol.% mindestens einer der Verbindungen Hydrochinon, 4,4′-Dihydroxydiphenyl oder Resorcin und

15d) einer der Summe der Komponenten 15b) und 15c) entsprechenden molaren Menge an Terephthalsäure und/oder Isophthalsäure.

15/6. Polyetherestercarbamide, aufgebaut aus

15a) mindestens 10 Mol.% 4-Hydroxybenzoesäure

15b) 0,1 bis 7 Mol.% Harnstoff

15c₁) 5 bis 20 Mol.% 4,4′-Di(p-hydroxyphenoxy)-diphenylsulfon

15c₂) 10 bis 30 Mol.% tert.-Butylhydrochinon und

15d) einer der Summe der Komponenten 15b) und 15c) äquivalenten molaren Menge an Terephthalsäure.

15/7. Polyetheresterimidcarbamide, aufgebaut aus

15a) mindestens 10 Mol.% 4-Hydroxybenzoesäure

15b) 0,1 bis 5 Mol.% Harnstoff

15c₁) 5 bis 35 Mol.% 4,4′-Di(p-hydroxyphenoxy)-diphenylsulfon

15c₂) einer Summe aus den Komponenten (d1 + d2) - ($c_1$ + b) entsprechenden molaren Menge an Hydrochinon und/oder 4,4′-Dihydroxydiphenyl und

15d₁) 5 bis 35 Mol.% 4,4′-Bis[(4-carboxy)-N-phthalimido]-diphenylethermethan, -sulfon, -sulfid, -keton oder -methan und

15d₂) 15 bis 30 Mol.% Terephthalsäure.

15/8. Polyestercarbamide, aufgebaut aus

15a) mindestens 20 Mol.% 4-Hydroxibenzoesäure

15b) 1 bis 10 Mol.% Harnstoff

15c₁) 5 bis 15 Mol.% tert.-Butylhydrochinon

15c₂) 5 bis 15 Mol.% 4,4′-Dihydroxydiphenyl und

15d) einer der Summe der Komponenten 15b) und 15c) entsprechenden molaren Menge an Terephthalsäure.

Es versteht sich, daß sich in den vorgegebenen Polykondensaten die Komponenten jeweils auf 100 Mol.% ergänzen.

16. Vollaromatische mesomorphe Polyester die unterhalb von 300° C eine flüssigkristalline fadenbildende Schmelze bilden, aufgebaut im wesentlichen aus

16a)5 bis 25 Mol% wiederkehrenden Einheiten der Formel

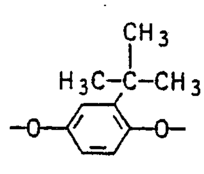

16b)5 bis 25 Mol% wiederkehrenden Einheiten der Formel

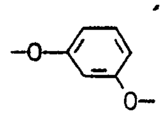

16c)10 bis 50 Mol% wiederkehrenden Einheiten der Formel

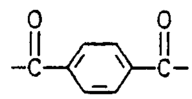

und

16d)mindestens 10 Mol% wiederkehrenden Einheiten der Formel

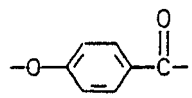

wobei die Summe der molaren Anteile der Komponenten 16a), 16b), 16c) und 16d) jeweils 100 Mol% ergibt und das molare Verhältnis der Komponenten 16a) und 16b) zur Komponente 16c) im Bereich von 0,9:1 bis 1,1:1 liegt.

Als Ausgangsverbindungen für die verschiedenen Einheiten sind t-Butylhydrochinon, Resorcin, Terephthalsäure und p-Hydroxybenzoesäure zu nennen.

17. Thermotrop mesomorphe Polyester aufgebaut aus

17a) mindestens 10 Mol.% Einheiten, die sich von p-Hydroxybenzoesäure ableiten,

17b)1 bis 25 Mol.% wiederkehrenden Einheiten der Formel

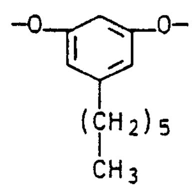

17c)5 bis 20 Mol.% mindestens einer der wiederkehrenden Einheiten der folgenden Formeln

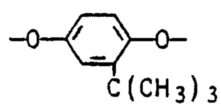

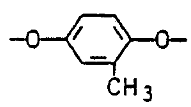

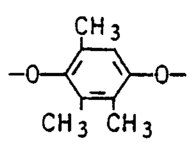

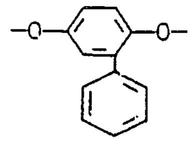

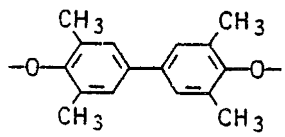

17d)5 bis 15 Mol.% wiederkehrenden Einheiten der Formel

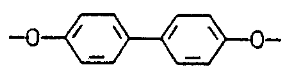

17e)10 bis 60 mol.% wiederkehrenden Einheiten der Formel

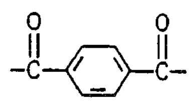

wobei die Summe der molaren Anteile 17a), 17b), 17c) und 17e) jeweils 100 mol.% ergibt und das molare Verhältnis der Komponenten 17b) + 17c) + 17d) zur Komponente 170) im Bereich von 0,9:1 bis 1,1:1 liegt.

Bevorzugte Ausgangsstoffe sind für wiederkehrende Einheiten der Formel

17b)3-n-Hexylresorcin,

17c)t-Butylhydrochinon, Methylhydrochinon, Trimethylhydrochinon, Phenylhydrochinon und 3,3′-5,5′-Tetramethyl-4,4′-dihydroxydiphenyl

17d)4,4′-Dihydroxydiphenyl

17e)Terephthalsäure.

18. Vollaromatische thermotrop mesomorphe Polyester auf der Basis von

18a)30 bis 60 mol% 4-Hydroxybenzoesäure

18b)20 bis 35 mol% einer Mischung aus

$b_1$) Terephthalsäure und

$b_2$) Isophthalsäure

wobei das molare Verhältnis von $b_1$ : $b_2$ im Bereich von 1,04:1 bis 19:1, vorzugsweise von 1,5:1 bis 10:1 liegt, und

18c)20 bis 35 mol% einer Mischung aus

18$c_1$) Hydrochinon

18$c_2$) 4,4′-Dihydroydiphenyl und

18$c_3$) 0 bis 5 Mol.% einer Dihydroxyverbindung der allgemeinen Formel

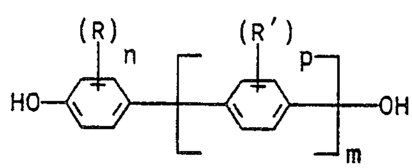

wobei R und R′ Alkylgruppen mit 1 bis 4 C-Atomen, Halogen oder eine Arylgruppe darstellen, n und p den Wert 1, 2 oder 3 und m den Wert 0 oder 1 haben, das molare Verhältnis von 18$c_1$) : 18$c_2$) im Bereich von 0,1:1 bis 2,67:1, vorzugsweise von 0,5:1 bis 2,33:1 liegt und das molare Verhältnis von 18b):18c)im Bereich von 0,9:1 bis 1,1:1, vorzugsweise von 0,98:1 bis 1,02:1 liegt.

Die Summe der Komponenten 18a) + 18b) + 18c) ergibt stets 100 mol%.

19. Vollaromatische thermotrop mesomorphe Polyester auf der Basis von

19a)30 bis 60 mol% 4-Hydroxibenzoesäure

19b)20 bis 35 mol% einer Mischung aus

$19b_1$) Terephthalsäure und

$19b_2$) Isophtalsäure

wobei das molare Verhältnis von $19b_1$) : $19b_2$) im Bereich von 1,04:1 bis 19:1, vorzugsweise von 1,5:1 bis 10:1 liegt, und

19c)20 bis 35 mol% einer Mischung aus

$19c_1$) Hydrochinon

$19c_2$) 4,4′-Dihydroxydiphenyl und

$19c_3$) 0,5 bis 5 mol%

$19c_{31}$) 2,7-Dihydroxynaphthalin und/oder

$19c_{32}$) 1,3-Dihydroxybenzol und/oder

$19c_{33}$) einer aromatischen Dihydroxyverbindung der allgemeinen Formel

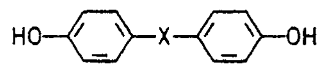

wobei X $-CH_2-$, $-C(CH_3)_2$, -S-, $SO_2$-, -O- oder -CO-ist, oder deren kernsubstituierten Chlor-, Brom-, Aryl- oder $C_1$-$C_8$-Alkyl- oder Alkoxyderivaten, und/oder $19c_{34}$) einer Verbindung der allgemeinen Formel

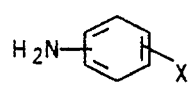

wobei X $-NH_2$ oder -OH ist und sich die Substituenten in meta-oder para-Stellung zueinander befinden, oder deren kernsubstituierten Chlor-, Brom-, Aryl- oder $C_1$-$C_8$-Alkyl- oder Alkoxyderivaten, wobei das molare Verhältnis von $19c_1$) : $19c_2$) im Bereich von 0,1:1 bis 2,67:1 vorzugsweise von 0,5:1 bis 2,33:1 und das molare Verhältnis von 19b):19c) im Bereich von 0,9:1 bis 1,1:1, vorzugsweise von 0,98:1 bis 1,02:1 liegt.

20. Vollaromatische thermotrop mesomorphe Polyester auf der Basis von

20a)25 bis 60 mol% einer Mischung aus

$20a_1$) 4-Hydroxibenzoesäure und

$20a_2$) 3-Hydroxibenzoesäure, 4-Aminobenzoesäure und/oder 3-Aminobenzoesäure oder deren kernsubstituierten Chlor-, Brom-, $C_1$-$C_8$-Alkyl- oder $C_1$-$C_8$-Alkoxyderivaten

wobei das molare Verhältnis $20a_1$):$20a_2$) im Bereich von 5:1 bis 41:1, vorzugsweise von 6:1 bis 20:1 liegt,

20b)20 bis 37,5 mol% einer Mischung aus

$20b_1$) Terephthalsäure und

$20b_2$) Isophthalsäure

wobei das molare Verhältnis von $20b_1$) : $20b_2$) im Bereich von 1,04:1 bis 19:1, vorzugsweise von 1,5:1 bis 10:1 liegt, und

20c)20 bis 37,5 mol% einer Mischung aus

$20c_1$) Hydrochinon

$20c_2$) 4,4′-Dihydroxydiphenyl

wobei das molare Verhältnis von $20c_1$) : $20c_2$) im Bereich von 0,1:1 bis 2,67:1, vorzugsweise von 0,5:1 bis 2,33:1 und das molare Verhältnis von 20b):20c) im Bereich von 0,9:1 bis 1,1:1, vorzugsweise von 0,98:1 bis 1,02:1 liegt.

21. Vollaromatische thermotrop mesomorphe Polyester auf der Basis von

21a)30 bis 60 mol% 4-Hydroxibenzoesäure

21b)20 bis 35 mol% einer Mischung aus

$21b_1$) Terephthalsäure und

$21b_2$) Isophthalsäure

$21b_3$) 0,5 bis 5 mol% einer Dicarbonsäure der allgemeinen Formel

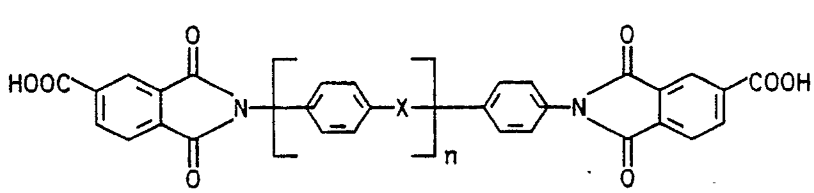

wobei X -O-, -S-, $-SO_2-$, -CO-, $-CH_2-$ oder $-C(CH_3)_2-$ ist, n den Wert 0 oder 1 hat und die beiden Imid-Stickstoffatome in meta-oder para-Stellung zu X stehen, oder deren kernsubstituierten $C_1$-$C_8$-Alkyl-, $C_1$-$C_8$-Alkoxy-, Aryl-, Chlor- oder Bromderivaten und
wobei das molare Verhältnis von $21b_1$) : $21b_2$) im Bereich von 1,04:1 bis 19:1, vorzugsweise von 1,5:1 bis 10:1 liegt, und

21c)20 bis 35 mol% einer Mischung aus
$21c_1$) Hydrochinon
$21c_2$) 4,4′-Dihydroxydiphenyl
wobei das molare Verhältnis von $21c_1$) :$21c_2$) im Bereich von 0,1:1 bis 2,67:1, vorzugsweise von 0,5:1 bis 2,33:1 und das molare Verhältnis von 21b):21c) im Bereich von 0,9:1 bis 1,1:1, vorzugsweise von 0,98:1 bis 1,02:1 liegt.

Als geeignete Ausgansverbindungen $21b_3$) sind die für die Polymere des vorstehend beschriebenen Typs 9 unter der Einheit 9a) aufgeführten Verbindungen zu nennen.

22. Thermotrop mesomorphe vollaromatische Polyester auf der Basis von
22a)30 bis 60 Mol.% 4-Hydroxybenzoesäure,
22b)20 bis 35 Mol.% Terephthalsäure und
22c)20 bis 35 Mol.% einer Mischung aus
$22c_1$) Trimethylhydrochinon und
$22c_2$) Resorcin
im molaren Verhältnis $22c_1$):$22c_2$) von 0,4:1 bis 0,7:1, vorzugsweise von 0,45:1 und 0,65:1, und das molare Verhältnis von 22b):22c) im Bereich 0,9:1 bis 1,1:1, vorzugsweise von 0,98:1 bis 1,02:1 liegt.

Es ist weiterhin möglich, auch Mischungen verschiedener thermotroper Polymerer einzusetzen, oder aber Blends aus thermotropen Polymeren und anderen thermoplastischen Polymeren.

23. Vollaromatische thermotrop mesomorphe Polyester auf der Basis von
23a)3 bis 15 Mol.% Einheiten, die ssich vom Hydrochinon ableiten,
23b)5 bis 35 Mol.% Einheiten, insbesondere 25 bis 35 Mol.%, die sich vom 2,7-Dihydroxynaphthalin ableiten,
23c)der Summe aus 23a) und 23b) äquivalente molare Menge an Einheiten die sich von Terephthalsäure ableiten, und
23d)10 bis 70 Mol.%, insbesondere 10 bis 39,4 Mol.% Einheiten, die sich von p-Hydroxybenzoesäure ableiten.

Ein Teil der niedermolekularen Einheiten 23a) und 23b) kann ersetzt sein durch eine oder mehrere Einheiten, die sich von
23e)4,4′-Dihydroxydiphenyl und/oder
23f)4,4′-Dihydroxydiphenylsulfon und/oder
23g)2,2-Di-(4-hydroxyphenyl)propan ableiten.

Vorteilhaft beträgt der Gehalt an wiederkehrenden Einheiten 23e), 23f) und/oder 23g) 2 bis 20 Mol.%.

Besonders bevorzugt sind Polyester, wenn der Gehalt an wiederkehrenden Einheiten 23b) sowie einer oder mehrerer der wiederkehrenden Einheiten 23e), 23f) und/oder 23g) 25 bis 40 Mol.% beträgt.

24.Vollaromatische, thermotrop mesomorphe Polyester die aufgebaut sind aus
10 bis 90 Mol.% wiederkehrenden Einheiten der Formel

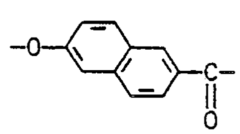

eine geeignete Ausgangsverbindung ist z.B. 2-Hydroxy-6-Carboxynaphthalin;
24b)10 bis 90 Mol.% wiederkehrenden Einheiten der Formel

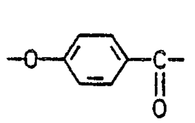

eine geeignete Ausgangsverbindung ist z.B. p-Hydroxybenzoesäure.

Vorteilhaft enthalten jsolche vollaromatischen Polyester die wiederkehrenden Einheiten 24a) in einer Menge von 65 bis 85 Mol.% und besonders bevorzugt in Mengen von 70 bis 80 Mol.%.

25. Vollaromatische, thermotrop mesomorphe Polyester, die aufgebaut sind aus

25a)31 bis 70 Mol.%, insbesondere 40 bis 60 Mol.% wiederkehrenden Einheiten der Formel

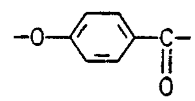

eine geeignete Ausgangsverbindung ist z.B. p-Hydroxybenzoesäure.

25b)20 bis 30 Mol.% wiederkehrenden Einheiten der Formel

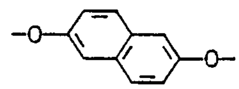

eine geeignete Ausgangsverbindung ist z.B. 2,6-Dihydroxynaphthalin

25c)20 bis 30 Mol.% wiederkehrenden Einheiten der Formel

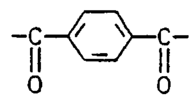

eine geeignete Ausgangsverbindung ist z.B. Terephthalsäure.

Es versteht sich, daß die aromatischen Kerne der wiederkehrenden Einheiten auch Alkyl- oder Alkoxyreste mit 1 bis 4 Kohlenstoffatomen, Halogenatome, Phenylreste oder Kombinationen derselben als Substituenten haben können.

26. Thermotrop mesomorphe Polyester die aufgebaut sind aus

26a)20 bis 60 Mol.%, insbesondere 35 bis 45 Mol.% wiederkehrenden Einheiten der Formel

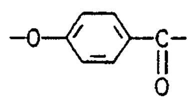

eine geeignete Ausgangsverbindung ist z.B. p-Hydroxybenzoesäure.

26b)5 bis 18 Mol.% wiederkehrenden Einheiten der Formel

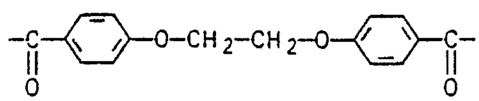

eine geeignete Ausgangsverbindung ist z.B. 1,2-Di-(4-carboxyphenoxy)ethan.

26c)5 bis 35 Mol.% wiederkehrenden Einheiten der Formel

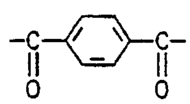

eine geeignete Ausgangsverbindung ist z.B. Terephthalsäure.

26d)20 bis 40 Mol.% wiederkehrenden Einheiten der Formel

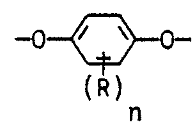

worin R jeweils einen Methylrest, ein Chlor- oder ein Bromatom oder Kombination derselben bezeichnen und n = 1, 2 oder 3 bedeutet.

Bevorzugte Polyester enthalten
35 bis 45 Mol.% der wiederkehrenden Einheiten 26a),
10 bis 15 Mol.% der wiederkehrenden Einheiten 26b),
15 bis 25 Mol.% der wiederkehrenden Einheiten 26c),
25 bis 35 Mol.% der wiederkehrenden Einheiten 26d).

Es versteht sich, daß die Summe der Komponenten 26b) und 26c) äquimolar zur Menge der Komponenten 26d) ist.

Weiterhin können auch die aromatischen Kerne der Komponenten 26a), 26b) und 26c) mit Alkyl- oder Alkoxyresten mit 1 bis 4 Kohlenstoffatomen, Halogenatomen, Phenylresten oder Kombinationen derselben substituiert sein.

27. Thermotrop mesomorphe Polyester, die aufgebaut sind aus

27a)20 bis 60 Mol.%, insbesondere 35 bis 45 Mol.% wiederkehrenden Einheiten der Formel

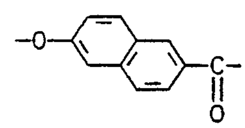

eine geeignete Ausgangsverbindung ist z.B. 2-Hydroxy-6-naphthalincarbonsäure,

27b)10 bis 50 Mol.%, insbesondere 25 bis 40 Mol.% wiederkehrenden Einheiten der Formel

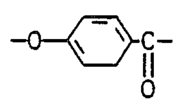

eine geeignete Ausgangsverbindung ist z.B. p-Hydroxybenzoesäure.

27c)5 bis 30 Mol.%, insbesondere 15 bis 25 Mol.% an wiederkehrenden Einheiten der Formel

$-O-R'-O-$

wobei $R'$ ein zweiwertiger Rest mit zumindest einem Phenylring ist.

27d)5 bis 30 Mol.%, insbesondere 15 bis 25 Mol.% wiederkehrenden Einheiten der Formel

$-\underset{\underset{O}{\|}}{C}-R^2-\underset{\underset{O}{\|}}{C}-$

wobei $R^2$ ein zweiwertiger Rest mit zumindest einem Phenylring ist.

Bevorzugte Ausgangsverbindung 27c) ist z.B. Hydrochinon und 27d) z.B. Terephthalsäure.

Es versteht sich, daß die wiederkehrenden Einheiten auch Alkyl- oder Alkoxyreste mit 1 bis 4 Kohlenstoffatomen, Halogenatome, Phenylreste oder Kombinationen derselben als Substituenten haben können.

28. Thermotrop mesomorphe Polyester, die aufgebaut sind aus

28a)10 bis 90 Mol.%, insbesondere 10 bis 40 Mol.% wiederkehrenden Einheiten der Formel

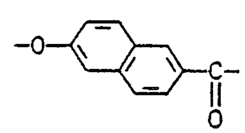

eine geeignete Ausgangsverbindung ist z.B. p-Hydroxy-6-naphthalincarbonsäure

28b)5 bis 45 Mol.%, insbesondere 10 bis 40 Mol.% wiederkehrenden Einheiten der Formel

$-O-R'-O-$

wobei $R'$ ein zweiwertiger Rest mit zumindest einem Phenylring ist, eine bevorzugte Ausgangsverbindung ist z.B. Hydrochinon,

28c)5 bis 45 Mol.%, insbesondere 10 bis 40 Mol.% wiederkehrenden Einheiten der Formel

$-\underset{\underset{O}{\|}}{C}-R^2-\underset{\underset{O}{\|}}{C}-$

worin $R^2$ ein zweiwertiger Rest mit zumindest einem Phenylring ist, eine bevorzugte Ausgangsverbindung

ist z.B. Terephthalsäure.

Andere bevorzugte Polyester enthalten 60 bis 80 Mol.% der Einheiten 28a), 10 bis 20 Mol.% 28b) und 10 bis 20 Mol.% der Einheiten 28c).

Es versteht sich, daß die aromatischen Kerne wiederkehrenden Einheiten auch Alkyl- oder Alkoxyreste mit 1 bis 4 Kohlenstoffatomen, Halogenatome, Phenylreste oder Kombinationen derselben als Substituenten haben können.

29. Thermotrop mesomorphe Polyesteramide, die aufgebaut sind aus

29a)10 bis 90 Mol.% der wiederkehrenden Einheiten der Formel

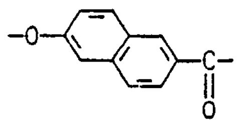

eine geeignete Ausgangsverbindung ist z.B. 2-Hydroxy-6-naphthalincarbonsäure

29b)5 bis 45 Mol.% wiederkehrenden Einheiten der Formel

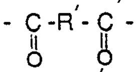

wobei R′ ein zweiwertiger Rest bestehend aus zumindest einem Phenylring oder ein zweiwertiger trans-Cyclohexanring ist, bevorzugte Ausgangsverbindung ist z.B. Terephthalsäure. ethan.

29c)5 bis 45 Mol.% wiederkehrenden Einheiten der Formel

$-Y-R^2-Z-$

worin $R^2$ ein zweiwertiger Rest bestehend aus zumindest einem Phenylring ist.

Y für -O-, -NH- oder $-NR^3-$ steht und Z -NH- oder $-NR^3-$ bezeichnet, $R^3$ bedeutet eine Alkylgruppe mit 1 bis 6 Kohlenstoffatomen oder ein Phenylring; bevorzugte Ausgangsverbindungen 29c) sind z.B. 4-Aminophenol oder p-Phenylendiamin;

29d)0 bis 40 Mol.% wiederkehrenden Einheiten der Formel

$-O-R^4-O-$

worin $R^4$ einen zweiwertigen Rest bestehend aus zumindest einem Phenylring bezeichnet, eine bevorzugte Ausgangsverbindung ist z.B. Hydrochinon.

Es versteht sich, daß die aromatischen Kerne der wiederkehrenden Einheiten auch Alkyl- oder Alkoxyreste mit 1 bis 4 Kohlenstoffatomen, Halogenatome, Phenylreste oder Kombinationen derselben als Substituenten haben können.

Die nach dem Verfahren der Erfindung hergestellten Polykondensate eignen sich zur Herstellung von Fäden, Fasern, Folien, Formkörpern und Überzügen.

Das Verfahren nach der Erfindung sei an folgendem Beispiel veranschaulicht.

## Beispiel

### Stufe 1

In einem Rührkessel, der mit einer Kolonne ausgestattet ist, werden 90 Mol Terephthalsäure, 117 Mol 4-Hydroxybenzoesäure, 31,5 Mol Hydrochinon, 18 Mol 4,4′-Dihydroxybiphenyl, 40,5 Mol 2,7-Dihydroxynaphthalin und 42,2 kg Essigsäureanhydrid im Verlauf von 3 Stunden unter Atmosphärendruck von 140 auf 260° C erhitzt, wobei 33 kg eines Gemisches aus Essigsäure und Essigsäureanhydrid über die Kolonne abdestilliert werden. Der Gehalt an Einsatzstoffen im Brüdenkondensat ist kleiner 0,1 Gew.%. Im Verlauf der 3 Stunden erhält man aus der anfänglichen Suspension eine homogene Schmelze mit einer inhärenten Viskosität von 0,21 dl/g, gemessen als 0,5 gew.%ige Lösung in 4-Chlorphenol, bei 60° C.

### Stufe 2

Das Oligomerengemisch aus der Stufe 1 wird kontinuierlich mit einem Vordruck von 6 bar in eine Präkondensationszone mit einem Durchmesser von 30 mm und einer Länge von 4000 mm, die mit Raschigringen gefüllt ist, und eine freie Oberfläche von 1,2 $m^2/l$ im oberen Drittel und 0,6 $m^2/l$ in den

unteren zwei Dritteln hat, in einer Menge von stündlich 3 kg oben zudosiert und bei einer Temperatur von 330 °C unter einem auf 8 mbar abnehmenden Druck mit einer Verweilzeit von 7 Minuten durch die Präkondensationszone geleitet, unter Ausbildung von dampfförmiger Essigsäure und unter Bildung eines Präkondensates.

Stufe 3

In einem an die Präkondensationszone angeschlossenen Abscheidegefäß, das zugleich in der Stufe 4 als Kondensationszone dient, trennt sich das Präpolymere, das eine inhärente Viskosität von 0,4 dl/g hat von der dampfförmigen Essigsäure, die abgezogen wird.

Stufe 4

Das von der dampfförmigen Essigsäure abgetrennte Prepolymere sammelt sich in dem Abscheidegefäß und wird bei einer Temperatur von 310 °C unter einem Druck von 8 mbar mit einer Verweilzeit von 35 Minuten kondensiert und über eine Zahnradpumpe ausgetragen, in Stränge gegossen, verfestigt und granuliert. Die inhärente Viskosität des Polymeren beträgt 0,65 dl/g. Das erhaltene Polykondensat hat eine Glastemperatur von 125 °C.

Nachkondensation

Das in der Stufe 4 anfallende Polykondensat wird schmelzflüssig in einen Extruder mit Entgasungseinrichtung überführt und bei einer Temperatur von 300 °C, einer mittleren Verweilzeit von 0,75 Stunden und einem Druck von 3 mbar nachkondensiert. Das so erhaltene hochpolymere Kondensat hat eine inhärente Viskosität von 2,2 dl/g.

**Ansprüche**

1. Verfahren zur Herstellung von aromatischen Polykondensaten, aufgebaut aus
a) aromatischen Hydroxy-, Thio- und/oder Aminocarbonsäuren, in denen die Hydroxy-, Thio- oder Aminogruppe nicht vicinal zur Carboxylgruppe steht,
b) aromatischen Dihydroxy-, Dithio-, Diamino- und/oder Hydroxy-Aminoverbindungen, in denen die Hydroxy-, Thio- und Aminogruppen nicht vicinal zueinander angeordnet sind und die bis zu 30 mol.% durch Alkandiamine mit 4 bis 10 Kohlenstoffatomen und/oder Cycloalkandiaminen mit 5 bis 8 Kohlenstoffatomen ersetzt sein können,
c) gegebenenfalls Harnstoff und
d) einer Summe der Komponenten b) und c) äquivalenten molaren Menge an aromatischen Dicarbonsäuren, in denen die Carboxylgruppen nicht vicinal angeordnet sind, und die bis zu 30 mol.% durch Alkandicarbonsäure mit 6 bis 12 Kohlenstoffatomen und/oder Cycloalkandicarbonsäuren mit 7 bis 10 Kohlenstoffatomen ersetzt sein können,
welches folgende Schritte umfaßt:

1. Umsetzen der Komponenten a), b) und d) und gegebenenfalls c) mit niederen Fettsäureanhydriden im molaren Überschuß, bezogen auf die Hydroxy-, Thio- und Aminogruppen, bei einer Temperatur von 140 bis 280 °C unter Abdestillieren von gebildeten Fettsäuren und überschüssigen Fettsäureanhydriden unter Bildung eines Oligomerengemisches,

2. Leiten des Oligomerengemisches aus der Stufe 1 von oben nach unten durch eine im wesentlichen senkrechte rohrförmige Präkondensationszone mit einer freien Oberfläche von 0,3 bis 1,5 $m^2/l$ mit einer Verweilzeit von 3 bis 30 Minuten unter einem Druck von 0,5 bis 100 mbar bei einer Temperatur von 250 bis 370 °C unter Bildung eines zweiphasigen Gemisches aus Präpolymeren und dampfförmigen Fettsäuren,

3. Trennen der Präpolymeren von den dampfförmigen Fettsäuren und

4. Kondensieren der Präpolymeren in einer Kondensationszone bei einer Temperatur von 250 bis 360 °C unter einem Druck von 0,5 bis 100 mbar mit einer Verweilzeit von 10 bis 60 Minuten zu einem granulierfähigen Polykondensat.

2. Verfahren nach Anspruch 1, dadurch gekennzeichnet, daß die Präkondensationszone im ersten Drittel von oben gesehen, eine innere Oberfläche von 1,1 bis 1,4 $m^2/l$ und in den restlichen zwei Dritteln eine innere Oberfläche von 0,5 bis 0,8 $m^2/l$ hat.

3. Verfahren nach den Ansprüchen 1 und 2, dadurch gekennzeichnet, daß man in der Stufe 2 eine Verweilzeit von 5 bis 20 Minuten einhält.

4. Verfahren nach den Ansprüchen 1 bis 3, dadurch gekennzeichnet, daß man in der Präkondensationszone bis zu einer inhärenten Viskosität von 0,2 bis 0,5 kondensiert.

5. Verfahren nach den Ansprüchen 1 bis 4, dadurch gekennzeichnet, daß man in der Stufe 4 eine Verweilzeit von 15 bis 45 Minuten einhält.

6. Verfahren nach den Ansprüchen 1 bis 5, dadurch gekennzeichnet, daß man in der Stufe 4 bis zu einer inhärenten Viskosität von 0,3 bis 1 kondensiert.

7. Verfahren nach den Ansprüchen 1 bis 6, dadurch gekennzeichnet, daß man teilkristalline Polykondensate nach der Stufe 4 in fester Form bei einer Temperatur von 10 bis 80 °C unter dem Schmelzpunkt des Polykondensats in fester Phase in Inertgasatmosphäre oder unter vermindertem Druck weiterkondensiert.

8. Verfahren nach den Ansprüchen 1 bis 6, dadurch gekennzeichnet, daß man amorphe Polykondensate nach der Stufe 4 im schmelzflüssigen Zustand unter fortwährender Ausbildung neuer Oberflächen unter vermindertem Druck weiterkondensiert.